# EUROPÄISCHE PATENTSCHRIFT

(11) **EP 3 585 522 B1**
(45) Veröffentlichungstag und Bekanntmachung des Hinweises auf die Patenterteilung: **03.03.2021**
(21) Anmeldenummer: 17805154.6
(22) Anmeldetag: 20.11.2017
(51) Int. Cl.: B05B 7/14

(54) **PULVERDICHTSTROMPUMPE**
DENSE PHASE POWDER PUMP
POMPE A POUDRE EN PHASE DENSE

(30) Priorität: 21.02.2017 DE 102017103487
(43) Veröffentlichungstag der Anmeldung: 01.01.2020
(73) Patentinhaber: Gema Switzerland GmbH, 9015 St. Gallen (CH)
(72) Erfinder: MAUCHLE, Felix, 9030 Abtwil (CH); VIELI, Hanspeter, 9403 Goldach (CH)
(74) Vertreter: Trinks, Ole
(86) Internationale Anmeldenummer: PCT/EP2017/079817
(87) Internationale Veröffentlichungsnummer: WO 2018/153515

(56) Entgegenhaltungen:
- EP-A1- 1 752 399
- EP-A1- 2 981 365
- DE-A1- 10 261 053
- US-A1- 2006 193 704

## Beschreibung

Die vorliegende Erfindung betrifft eine Pulverdichtstrompumpe zum Fördern von Beschichtungspulver nach dem Oberbegriff des unabhängigen Patentanspruchs 1.

Demgemäß betrifft die Erfindung insbesondere eine Pulverdichtstrompumpe zum Fördern von Beschichtungspulver von einem ersten Pulverreservoir zu einem stromabwärts der Pulverdichtstrompumpe angeordneten zweiten Pulverreservoir oder einer stromabwärts der Pulverdichtstrompumpe angeordneten Pulversprühpistole oder dergleichen Einrichtung zum Versprühen von Beschichtungspulver.

Pulverdichtstrompumpen (engl.: dense phase powder pumps) der eingangs genannten Art sind dem Prinzip nach aus dem Stand der Technik bekannt.

Beispielsweise betrifft die EP 1 551 558 A1 eine Pulverdichtstrompumpe, welche eine erste Pulverförderkammer und eine parallel zur ersten Pulverförderkammer angeordnete zweite Pulverförderkammer aufweist. Die beiden Pulverförderkammern der aus diesem Stand der Technik bekannten Pulverdichtstrompumpe sind sowohl ansaugseitig als auch förderseitig jeweils durch eine mechanisch betätigte Quetschventilanordnung begrenzt.

Im Einzelnen ist dabei vorgesehen, dass im ansaugseitigen bzw. förderseitigen Bereich der Pulverdichtstrompumpe die mit den jeweiligen Pulverförderkammern der Pulverdichtstrompumpe verbundenen Pulverschläuche mit einem mechanisch betätigten Stempel deformierbar sind, um den Schlauchabschnitt bei Bedarf abzuquetschen bzw. zu öffnen. Jeder Pulverförderkammer der aus diesem Stand der Technik bekannten Pulverdichtstrompumpe ist ein Filterrohr zugeordnet, welches den Umfang der entsprechenden Pulverförderkammer begrenzt. Das Filterrohr ist für Luft, jedoch nicht für Beschichtungspulver durchlässig und von einer Ringkammer umgeben, an die wechselweise Unterdruck oder Druckluft anschließbar ist. Dadurch kann in jede Pulverförderkammer wechselweise Beschichtungspulver eingesaugt oder mittels Druckluft aus der entsprechenden Pulverförderkammer ausgestoßen werden. Die beiden zueinander parallel angeordneten Pulverförderkammern werden wechselphasig betrieben, was bedeutet, dass eine der beiden Pulverförderkammern Beschichtungspulver durch den Pulvereinlass der Pulverdichtstrompumpe ansaugt, während die andere der beiden Pulverförderkammern eine zuvor in die Pulverförderkammer angesaugte Beschichtungspulverportion über den Pulverauslass der Pulverdichtstrompumpe abgibt.

Pulverdichtstrompumpen mit mehren, insbesondere zwei parallel zueinander geschalteten Pulverförderkammern sind auch aus der WO 2005/005060 A2 (US 2006/0193704 A1), der DE 199 59 473 A1 (US 2001/0003568 A1) und der EP 1 752 399 A1 bekannt.

Die Verwendung von Pulverdichtstrompumpen zur Förderung von Beschichtungspulver zu entsprechenden Einrichtungen zum Versprühen von Beschichtungspulver, wie insbesondere Pulversprühbeschichtungspistolen, ist aus der DE 196 11 533 B4, der WO 2004/087331 A1 und der EP 1 566 352 A2 bekannt.

Bevor die Verwendung von Pulverdichtstrompumpen der eingangs genannten Art zur Förderung von Beschichtungspulver bekannt wurde, wurden als Injektoren ausgebildete Pulverpumpen verwendet, welche auch heute noch zur Förderung von Beschichtungspulver eingesetzt werden. Im Unterschied zu Pulverdichtstrompumpen der eingangs genannten Art weisen als Injektoren ausgebildete Pulverpumpen jedoch den Nachteil auf, dass die mit als Injektoren ausgebildete Pulverpumpen üblicherweise nur eine geringere Menge an Beschichtungspulver pro Zeiteinheit fördern können.

Insofern haben sich Pulverdichtstrompumpen der eingangs genannten Art in der Praxis insbesondere für solche Anwendungen durchgesetzt, bei denen eine relativ große Menge an Beschichtungspulver pro Zeiteinheit zu fördern ist.

Im praktischen Gebrauch hat sich jedoch gezeigt, dass eine Pulverdichtstrompumpe, wie sie beispielsweise aus der EP 1 551 558 A1 bekannt ist, insbesondere bei manchen Pulverarten Probleme bei der kontinuierlichen Pulverförderung zeigen bzw. verhältnismäßig häufig gewartet werden müssen.

Demnach liegt eine Aufgabe der vorliegenden Erfindung darin, eine Pulverdichtstrompumpe der eingangs genannten Art dahingehend weiterzubilden, dass diese im Betrieb weniger wartungsanfällig ist und insbesondere unabhängig von der Pulverart stets eine kontinuierliche und gleichmäßige Pulverförderung gewährleitet.

Diese Aufgabe wird erfindungsgemäß durch den Gegenstand des unabhängigen Patentanspruchs 1 gelöst, wobei vorteilhafte Weiterbildungen der erfindungsgemäßen Pulverdichtstrompumpe in den abhängigen Ansprüchen angegeben sind.

Demnach wird erfindungsgemäß insbesondere eine Pulverdichtstrompumpe zum Fördern von Beschichtungspulver von einem ersten Pulverreservoir zu einem zweiten stromabwärts angeordneten Pulverreservoir oder einer stromabwärts angeordneten Pulversprühbeschichtungspistole oder dergleichen Einrichtung zum Versprühen von Beschichtungspulver angegeben, wobei die Pulverdichtstrompumpe mindestens eine Pulverförderkammer aufweist, welche über einen Pulvereinlass mit dem ersten Pulverreservoir und über einen Pulverauslass mit dem zweiten Pulverreservoir bzw. mit der Pulversprühbeschichtungspistole oder dergleichen Einrichtung zum Versprühen von Beschichtungspulver strömungsmäßig verbunden oder verbindbar ist. Am Pulvereinlass der Pulverdichtstrompumpe ist mindestens ein Pulvereinlassventil und am Pulverauslass mindestens ein Pulverauslassventil vorgesehen. Erfindungsgemäß ist insbesondere vorgesehen, dass im jeweils geöffneten Zustand das mindestens eine Pulvereinlassventil und/oder das mindestens eine Pulverauslassventil einen effektiven Strömungsquerschnitt aufweisen/aufweist, der mindestens 35% des effektiven Strömungsquerschnitts der mindestens einen Pulverförderkammer entspricht.

Der erfindungsgemäßen Lösung liegt die überraschende Erkenntnis zugrunde, dass ein besonders gleichmäßiger, kontinuierlicher und insbesondere auch wartungsarmer Betrieb der Pulverdichtstrompumpe erzielbar ist, wenn das mindestens eine Pulvereinlassventil und/oder das mindestens eine Pulverauslassventil im jeweils geöffneten Zustand einen effektiven Strömungsquerschnitt aufweisen/aufweist, der - bezogen auf den effektiven Strömungsquerschnitt der mindestens einen Pulverförderkammer der Pulverdichtstrompumpe - einen Minimalwert von mindestens 35% nicht unterschreitet.

Mit anderen Worten, erfindungsgemäß wird vorgeschlagen, dass das mindestens eine Pulvereinlassventil und/oder das mindestens eine Pulverauslassventil (bewusst) überdimensioniert ausgebildet werden. "Überdimensioniert" bedeutet in diesem Zusammenhang, dass das entsprechende Ventil im geöffneten Zustand einen effektiven Strömungsquerschnitt aufweist, der größer ist, als der Strömungsquerschnitt, welcher eigentlich erforderlich wäre, um innerhalb der zur Verfügung stehenden Ansaugphase bzw. Ausstoßphase die entsprechende Pulverförderkammer mit dem zu fördernden Pulver vollständig zu füllen bzw. die entsprechende Pulverförderkammer vollständig zu entleeren.

So wurde überraschend festgestellt, dass durch eine (bewusste) Überdimensionierung es mindestens einen Pulvereinlass-/Pulverauslassventils das Risiko einer Klumpenbildung beim Ansaug- bzw. Ausstoßprozess deutlich reduziert werden kann, und zwar insbesondere auch bei Pulversorten, die zur Klumpenbildung neigen. Darüber hinaus ist - im Vergleich zu herkömmlich eingesetzten, "normal-dimensionierten"-Ventilen - die Reaktionszeit von entsprechend überdimensional ausgeführten Pulvereinlass-/Pulverauslassventilen deutlich erhöht, so dass der Umschaltzyklus zwischen einer Pulveransaugphase und einer Pulverausstoßphase noch weiter erhöht werden kann, was wiederum einen positiven Effekt auf eine stetige und kontinuierliche Pulverförderung hat.

In bevorzugten Ausführungsformen der erfindungsgemäßen Pulverdichtstrompumpe ist vorgesehen, dass nur das mindestens eine Pulvereinlassventil entsprechend überdimensional ausgeführt ist. Dieser Ausführungsform liegt die Erkenntnis zugrunde, dass das Pulvereinlassventil der Pulverdichtstrompumpe maßgeblich ausschlaggebend für die Regulierung des von der Pulverdichtstrompumpe pro Zeiteinheit tatsächlich förderbaren Pulverstromes ist. Insofern ist gemäß Ausführungsformen der erfindungsgemäßen Pulverdichtstrompumpe vorgesehen, dass im geöffneten Zustand des mindestens einen Pulvereinlassventils dieses einen effektiven Strömungsquerschnitt aufweist, welcher größer ist als ein effektiver Strömungsquerschnitt des Pulverauslassventils in seinem geöffneten Zustand. Vorzugsweise ist dabei der effektive Strömungsquerschnitt des mindestens einen geöffneten Pulvereinlassventils um mindestens 50%, vorzugsweise um mindestens 100% und noch bevorzugter um mindestens 250% größer als der effektive Strömungsquerschnitt des mindestens einen geöffneten Pulverauslassventils ausgebildet.

Alternativ hierzu ist bei Ausführungsformen der erfindungsgemäßen Pulverdichtstrompumpe vorgesehen, dass das mindestens eine Pulvereinlassventil und das mindestens eine Pulverauslassventil im jeweils geöffneten Zustand einen zumindest im Wesentlichen gleichen effektiven Strömungsquerschnitt aufweisen. Diese Ausführungsform hat den Vorteil, dass für das mindestens eine Pulvereinlassventil und das mindestens eine Pulverauslassventil baugleiche Ventile verwendet werden können, was Vorteile im Hinblick auf Wartung und Bevorratung von Ersatzteilen mit sich bringt.

Gemäß Ausführungsformen der erfindungsgemäßen Pulverdichtstrompumpe kann diese als Ein-Kammer-Pulverdichtstrompumpe ausgebildet sein, bei welcher zur Förderung des Beschichtungspulvers insbesondere nur eine einzige Pulverförderkammer vorgesehen ist. Insbesondere in Kombination mit dem mindestens einen (bewusst) überdimensionierten Pulvereinlass-/Pulverauslassventil kann dabei erzielt werden, dass auch mit einer Ein-Kammer-Pulverdichtstrompumpe, d.h. einer Pulverdichtstrompumpe, die zur Förderung des Beschichtungspulvers nur eine einzige Pulverförderkammer aufweist, eine für den praktischen Gebrauch hinreichende kontinuierliche Förderung von Beschichtungspulver möglich wird. Dies liegt unter anderem daran, dass mit den überdimensioniert ausgebildeten Pulvereinlass-/Pulverauslassventilen die Schaltzyklen der Ventile und somit die Betriebszyklen der Ein-Kammer-Pulverdichtstrompumpe erhöht werden können, was einen maßgeblichen Einfluss auf eine kontinuierliche und stetige Pulverförderung ist.

Insofern liegt diesbezüglich ein besonderes Augenmerk auf die Kombination des mindestens einen überdimensional ausgebildeten Pulvereinlass-/Pulverauslassventils und der als Ein-Kammer-Pulverdichtstrompumpe ausgebildeten Pulverdichtstrompumpe. Dies gilt insbesondere für solche Ausführungsformen, bei denen vor allem das Pulvereinlassventil der als Ein-Kammer-Pulverdichtstrompumpe ausgebildeten Pulverdichtstrompumpe entsprechend überdimensioniert ausgebildet ist.

Mit dieser Weiterbildung kann insbesondere auch das bislang existierende Vorurteil der Fachwelt, nämlich dass zur kontinuierlichen Förderung von Beschichtungspulver mindestens zwei parallel angeordnete und wechselweise betriebene Pulverförderkammern zum Einsatz kommen müssen, überwunden werden, da aufgrund des mindestens einen (bewusst) überdimensionierten Pulvereinlass-/Pulverauslassventils bei der als Ein-Kammer-Pulverdichtstrompumpe ausgebildeten Pulverdichtstrompumpe die Pump-Frequenz, d.h. die Frequenz, mit welcher Beschichtungspulver von der einzigen Pulverförderkammer eingesaugt und dann wieder abgegeben wird, entsprechend erhöht werden kann.

Im Vergleich zu herkömmlichen Pulverdichtstrompumpen, die als Mehr-Kammer-Pulverdichtstrompumpen ausgebildet sind und mehrere, insbesondere mindestens zwei parallel zueinander angeordnete und gegenphasig zueinander betriebene Pulverförderkammern aufweisen, kann mit einer als Ein-Kammer-Pulverdichtstrompumpe ausgebildeten Pulverdichtstrompumpe gemäß der vorliegenden Erfindung eine Pulverförderung mit einer vergleichbaren Gleichmäßigkeit ohne Strömungspulsationen im Pulverweg stromabwärts des Pulverauslasses der Pulverdichtstrompumpe erzielt werden, wobei andererseits jedoch die Anzahl der im Betrieb der Pulverdichtstrompumpe zu betätigenden Komponenten deutlich reduziert und der strukturelle Aufbau der Pulverdichtstrompumpe deutlich vereinfacht ist.

Diese erfindungsgemäße Ausführungsform liefert somit bei gleichzeitiger Reduzierung der strukturellen Komponenten und bei gleichzeitiger Vereinfachung des zum Betrieb der Pulverdichtstrompumpe erforderlichen Schaltdiagramm eine besonders leicht zu realisierende aber dennoch effektive Alternative zu herkömmlichen als Mehr-Kammer-Pulverdichtstrompumpen ausgeführten Pulverdichtstrompumpen.

Erfindungsgemäß weist die Pulverdichtstrompumpe einen mit dem (stromaufwärts liegenden) ersten Pulverreservoir verbundenen oder verbindbaren Pulvereinlass und einen mit dem (stromabwärts liegenden) zweiten Pulverreservoir bzw. mit der (stromabwärts liegenden) Pulversprühbeschichtungspistole oder dergleichen Einrichtung zum Versprühen von Beschichtungspulver verbundenen oder verbindbaren Pulverauslass auf. Dabei können der Pulvereinlass der Pulverdichtstrompumpe an einem ersten Endbereich der Pulverdichtstrompumpe und der Pulverauslass der Pulverdichtstrompumpe an einem gegenüberliegenden zweiten Endbereich der Pulverdichtstrompumpe angeordnet sein, wobei die mindestens eine Pulverförderkammer der Pulverdichtstrompumpe zwischen dem Pulvereinlass und dem Pulverauslass der Pulverdichtstrompumpe angeordnet ist.

Bei einer vorteilhaften Realisierung der vorliegenden Erfindung, weist die mindestens eine Pulverförderkammer der erfindungsgemäßen Pulverdichtstrompumpe an einem ersten Endbereich einen Pulvereinlass mit dem mindestens einen Pulvereinlassventil und an einem gegenüberliegenden zweiten Endbereich einen Pulverauslass mit dem mindestens einen Pulverauslassventil auf. Über das mindestens eine Pulvereinlassventil ist der Pulvereinlass der mindestens einen Pulverförderkammer mit dem Pulvereinlass der Pulverdichtstrompumpe strömungsmäßig verbunden oder verbindbar. Andererseits ist der Pulverauslass der mindestens einen Pulverförderkammer der Pulverdichtstrompumpe über das mindestens eine Pulverauslassventil mit dem Pulverauslass der Pulverdichtstrompumpe strömungsmäßig verbunden oder verbindbar.

Gemäß einem anderen Aspekt der vorliegenden Erfindung weist die Pulverdichtstrompumpe einen mit dem ersten Pulverreservoir verbundenen oder verbindbaren Pulvereinlass und einen mit dem zweiten Pulverreservoir bzw. mit der Pulversprühbeschichtungspistole oder dergleichen Einrichtung zum Versprühen von Beschichtungspulver verbundenen oder verbindbaren Pulverauslass auf, wobei die mindestens eine Pulverförderkammer der erfindungsgemäßen Pulverdichtstrompumpe an einem Endbereich einen Pulverdurchgang aufweist, der sowohl als Pulvereinlass als auch als Pulverauslass für die mindestens eine Pulverförderkammer dient. Gemäß diesem Aspekt der vorliegenden Erfindung ist es von Vorteil, wenn über das mindestens eine Pulvereinlassventil der Pulverdichtstrompumpe der Pulverdurchgang der mindestens einen Pulverförderkammer mit dem Pulvereinlass der Pulverdichtstrompumpe strömungsmäßig verbunden oder verbindbar ist, wobei über das mindestens eine Pulverauslassventil der Pulverdurchgang der mindestens einen Pulverförderkammer mit dem Pulverauslass der Pulverdichtstrompumpe strömungsmäßig verbunden oder verbindbar ist.

Gemäß einer bevorzugten Realisierung ist dabei vorgesehen, dass die Pulverdichtstrompumpe ferner einen Verteiler aufweist, um den Pulverdurchgang der Pulverförderkammer mit dem Pulvereinlassventil einerseits und dem Pulverauslassventil andererseits strömungsmäßig zu verbinden. Denkbar hierbei ist es insbesondere, als Verteiler ein Y-Stück zu verwenden. Selbstverständlich kommen aber auch andere Ausführungsformen hierfür in Frage.

In bevorzugten Ausführungsformen der erfindungsgemäßen Lösung ist ferner eine Steuereinrichtung vorgesehen, welche derart ausgebildet ist, um das mindestens eine Pulvereinlassventil und/oder das mindestens eine Pulverauslassventil der Pulverdichtstrompumpe wechselweise anzusteuern. Die Steuereinrichtung ist vorzugsweise ferner ausgebildet, um abwechselnd einen Überdruck und einen Unterdruck in der mindestens einen Pulverförderkammer der Pulverdichtstrompumpe anzulegen.

Der mindestens einen Pulverförderkammer der Pulverdichtstrompumpe ist vorzugsweise ein Gasweg zugeordnet, durch welchen die entsprechende Pulverförderkammer wechselweise mit einer Vakuumleitung oder Vakuumquelle zum Einsaugen von Beschichtungspulver in die Pulverförderkammer durch das offene Pulvereinlassventil, während das Pulverauslassventil geschlossen ist, oder mit einer Druckluftleitung oder Druckluftquelle zum pneumatischen Ausstoßen einer in der Pulverförderkammer vorhandenen Pulverportion durch das offene Pulverauslassventil, während das Pulvereinlassventil geschlossen ist, verbindbar ist. Die Steuereinrichtung ist dabei ausgebildet, die einzige Pulverförderkammer wechselweise auf Einsaugen und auf Ausstoßen von Pulver umzuschalten.

Bei vorteilhaften Realisierungen der erfindungsgemäßen Pulverdichtstrompumpe weist der zuvor genannte Gasweg eine Saugluftöffnung und eine Druckluftöffnung in einer Gehäuseumfangswand der Pulverförderkammer auf, wobei vorzugsweise ferner ein mikroporöses Filterelement, vorzugsweise in Gestalt eines Filterrohres, vorgesehen ist, welches mindestens auf einer Teillänge oder vorzugsweise der gesamten Länge der Pulverförderkammer die Umfangswand der Pulverförderkammer bildet und die Pulverkammer von einer Ringkammer trennt. Die Ringkammer ist zwischen dem Außenumfang des vorzugsweise als Filterrohr ausgebildeten Filterelements und dem Innenumfang der Gehäuseumfangswand gebildet und umgibt das vorzugsweise als Filterrohr ausgebildete Filterelement. Das vorzugsweise als Filterrohr ausgebildete Filterelement ist für Luft, jedoch nicht für Beschichtungspulver durchlässig aufgrund seiner kleinen Porengröße. Es besteht vorzugsweise aus einem Sintermaterial.

Das mindestens eine Pulvereinlassventil und das mindestens eine Pulverauslassventil der erfindungsgemäßen Pulverdichtstrompumpe sind vorzugsweise jeweils als Quetschventil ausgebildet, insbesondere von der Bauweise, welche einen flexiblen elastischen Schlauch als Ventilkanal aufweisen, wobei dieser flexible elastische Schlauch zum Schließen des entsprechenden Ventils mit Hilfe von Betätigungsdruckluft in einer den Schlauch umgebenden Druckkammer zusammenquetschbar ist.

Insbesondere ist es in diesem Zusammenhang von Vorteil, wenn das als Quetschventil ausgebildete mindestens eine Pulvereinlassventil und das als Quetschventil ausgebildete mindestens eine Pulverauslassventil jeweils ein Quetschventilgehäuse mit einem Pulvereinlass und einem Pulverauslass sowie mit einem elastisch verformbaren Ventilelement, vorzugsweise in Gestalt eines Schlauchabschnittes, aufweist. Insbesondere sollte dabei das Ventilelement im Inneren des Quetschventilgehäuses derart angeordnet sein, dass der Pulvereinlass des Quetschventils mit dem Pulverauslass des Quetschventils über das als Schlauchabschnitt gebildete Ventilelement in Fluidverbindung bringbar ist.

Hierbei ist es von Vorteil, wenn das Quetschventilgehäuse mindestens einen Anschluss aufweist zum bedarfsweisen Zuführung von Druckluft (Betätigungsdruckluft) in den zwischen der Innenwand des Quetschventilgehäuses und dem im Inneren des Quetschventilgehäuses angeordneten Ventilelement gebildeten Raum. Beim Zuführen von Betätigungsdruckluft wird in dem Raum zwischen der Innenwand des Quetschventilgehäuses und dem Ventilelement ein Überdruck gebildet, infolgedessen das Ventilelement in radialer Richtung zusammengedrückt und das Quetschventil geschlossen wird. Wenn anschließend in dem Quetschventilgehäuse eine Druckentlastung erfolgt, geht das Ventilelement wieder in seinen Ausgangszustand über, so dass zwischen dem Pulvereinlass des Quetschventils und dem Auslass des Quetschventils über das Ventilelement eine Fluidverbindung vorliegt.

In diesem Zusammenhang ist es ferner denkbar, dass das Quetschventilgehäuse mindestens einen Anschluss zum bedarfsweisen Anlegen eines Unterdruckes im Inneren des Quetschventilgehäuses aufweist, um auf diese Weise die Öffnungszeit des Quetschventils zu reduzieren.

Die von der erfindungsgemäßen Pulverdichtstrompumpe pro Zeiteinheit förderbare Pulvermenge ist von mehreren Parametern abhängig, insbesondere von der Größe (Volumen) der Pulverförderkammer, der Frequenz, mit welcher Beschichtungspulver in die Pulverförderkammer eingesaugt und dann wieder abgegeben wird, der Stärke (Höhe) des zum Einsaugen des Beschichtungspulvers in die Pulverförderkammer angelegten Vakuums, der Öffnungszeitdauer des mindestens einen Pulvereinlassventils während der Saugphase sowie von den Strömungswiderständen in den Pulverleitungen stromaufwärts und insbesondere stromabwärts der Pulverdichtstrompumpe. Die Strömungswiderstände in den Pulverleitungen stromaufwärts und insbesondere stromabwärts der Pulverdichtstrompumpe sind insbesondere von der Länge und dem Innenquerschnitt der Pulverleitungen, meistens Pulverschläuche, abhängig.

Die Förderfrequenz der Pulverdichtstrompumpe hängt vor allem von der Frequenz ab, mit welcher Beschichtungspulver in die Pulverförderkammer eingesaugt und dann wieder abgegeben wird bzw. abgegeben werden kann.

Um bei der erfindungsgemäßen und insbesondere als Ein-Kammer-Pulverdichtstrompumpe ausgeführten Pulverdichtstrompumpe am Pulverauslass der Pulverdichtstrompumpe Pulsationen im abgegebenen Pulverstrom zu vermeiden oder zumindest zu reduzieren, ist gemäß bevorzugten Realisierungen der Erfindung die Pulverdichtstrompumpe strukturell derart ausgebildet, dass die Reaktionszeit zum Umschalten von einer Saugphase, während welcher die Pulverförderkammer der Ein-Kammer-Pulverdichtstrompumpe mit einer Vakuumquelle verbunden ist, und einer Abgabephase, während welcher die Pulverförderkammer der Ein-Kammer-Pulverdichtstrompumpe mit einer Druckluftquelle bzw. Transportdruckluftquelle verbunden ist, entsprechend verkürzt werden kann, damit letztendlich die Förderfrequenz der Pulverdichtstrompumpe erhöht werden kann.

Hierzu ist erfindungsgemäß insbesondere vorgesehen, dass im geöffneten Zustand das mindestens eine Pulvereinlassventil und/oder das mindestens eine Pulverauslassventil einen effektiven Strömungsquerschnitt aufweisen/aufweist, der mindestens 35% des effektiven Strömungsquerschnitts der mindestens einen Pulverförderkammer entspricht.

Gemäß einem Aspekt der Erfindung ist ferner diesbezüglich vorgesehen, dass während der Saugphase der Pulverförderkammer ein Unterdruck in der Pulverförderkammer frühestens gleichzeitig wie, oder vorzugsweise um eine bestimmte Verzögerungszeit später als ein Steuersignal zum Öffnen des am Pulvereinlass der Pulverförderkammer angeordneten Pulvereinlassventils angelegt wird, so dass der Aufbau des Unterdruckes in der Pulverförderkammer frühestens gleichzeitig mit dem Öffnen des Pulvereinlassventils beginnt, vorzugsweise aber um die genannte vorbestimmte Verzögerungszeit später als das Öffnen des Pulvereinlassventils. Die vorbestimmte Verzögerungszeit liegt vorzugsweise in einem Bereich zwischen 0 ms und 50 ms bei einem Förderzyklus der Förderkammer (= Pumpenzyklus der Pulverdichtstrompumpe) von ungefähr 200 ms. Dieses Beispiel schließt jedoch nicht aus, andere Verzögerungszeiten und Zykluszeiten für die Pulverdichtstrompumpe zu verwenden.

Dadurch, dass bei vorteilhaften Realisierungen der erfindungsgemäßen Lösung während der Saugphase der Pulverdichtstrompumpe in der Pulverförderkammer erst dann ein Unterdruck angelegt wird, wenn bereits das Pulvereinlassventil geöffnet ist bzw. frühestens gleichzeitig mit dem Öffnen des Pulvereinlassventils, kann erreicht werden, dass der Unterdruck in der Pulverförderkammer einer Öffnungsbewegung des Pulvereinlassventils, insbesondere wenn dieses als Quetschventil ausgeführt ist, zumindest zum Zeitpunkt des Beginns der Öffnungsbewegung des Pulvereinlassventils weniger stark entgegenwirkt als bei aus dem Stand der Technik bekannten und als Mehr-Kammer-Pulverdichtstrompumpen ausgebildeten Lösungen.

Zur Verkürzung der Reaktionszeit der erfindungsgemäßen Pulverdichtstrompumpe und somit zum Erhöhen der Förderfrequenz dieser ist zusätzlich oder alternativ zu der zuvor genannten Maßnahme vorzugsweise vorgesehen, dass das am Pulvereinlass der Pulverförderkammer vorgesehene Pulvereinlassventil sowie das am Pulverauslass der Pulverförderkammer vorgesehene Pulverauslassventil jeweils als pneumatisch ansteuerbares Quetschventil ausgebildet sind. Zur Ansteuerung dieser Quetschventile kommen entsprechende Steuerventile zum Einsatz, mit denen in koordinierter Weise Betätigungsdruckluft den Quetschventilen zugeführt wird.

Gemäß bevorzugten Ausführungsformen der erfindungsgemäßen Pulverdichtstrompumpe ist vorgesehen, dass die Länge der pneumatischen Steuerleitungen zu den Quetschventilen möglichst verkürzt ist, um zu erreichen, dass bei der Betätigung der entsprechenden Quetschventile, d.h. beim Zuführen von Betätigungsdruckluft bzw. beim Anlegen eines Unterdruckes oder beim Entlüften der entsprechenden Quetschventilgehäuse, Reaktions-Verzögerungszeiten minimiert werden können.

Zu diesem Zweck ist bei bevorzugten Ausführungsformen der erfindungsgemäßen Pulverdichtstrompumpe beispielsweise ein vorzugsweise aus mehreren Modulen zusammengesetzter Materialblock vorgesehen, in welchem die mindestens eine Pulverförderkammer der Pulverdichtstrompumpe gebildet bzw. an welchem die mindestens eine Pulverförderkammer der Pulverdichtstrompumpe angeordnet ist, wobei in vorteilhafter Weise ebenfalls das Pulvereinlassventil und das Pulverauslassventil der mindestens einen Pulverförderkammer der Pulverdichtstrompumpe an diesem Materialblock angeordnet sind. Insbesondere sind dabei die entsprechenden Steuerventile, die zum pneumatischen Ansteuern des vorzugsweise jeweils als Quetschventil ausgebildeten Pulvereinlass- und Pulverauslassventils dienen, mit dem Pulvereinlassventil bzw. dem Pulverauslassventil über im Materialblock ausgebildeten Druckluft-Kanälen strömungsmäßig derart direkt verbunden, um die Zufuhr und Abfuhr von Betätigungsluft zu dem als Quetschventil ausgebildeten Pulvereinlass- bzw. Pulverauslassventil zu gewährleisten.

In diesem Zusammenhang ist es ferner von Vorteil, wenn alle Steuerventile, welche mit der mindestens einen Pulverförderkammer der erfindungsgemäßen Pulverdichtstrompumpe für die Zufuhr von Transportdruckluft (während der Abgabephase der Pulverdichtstrompumpe) und von Vakuum (während der Saugphase der Pulverdichtstrompumpe) strömungsmäßig verbunden sind, an dem Materialblock angeordnet sind und mittels Kanälen, welche in dem Materialblock gebildet sind, mit der einzigen Pulverförderkammer strömungsmäßig direkt verbunden sind.

Mit diesen Maßnahmen kann erreicht werden, dass die Länge der pneumatischen Steuerleitungen zu den Quetschventilen und die Länge der Luftleitungen zu der mindestens einen Pulverförderkammer möglichst verkürzt sind, um damit zu erreichen, dass bei der Betätigung der entsprechenden Quetschventile, d.h. beim Zuführen von Betätigungsdruckluft bzw. beim Anlegen eines Unterdruckes oder beim Entlüften der entsprechenden Quetschventilgehäuse, Reaktions-Verzögerungszeiten minimiert werden können.

Wie bereits ausgeführt, kann die Reaktionszeit der erfindungsgemäßen Pulverdichtstrompumpe verkürzt und damit die Förderfrequenz erhöht werden, indem Sorge getragen wird, dass während der Saugphase der Pulverdichtstrompumpe, also dann, wenn in der Pulverförderkammer ein Unterdruck angelegt wird, dieses frühestens gleichzeitig mit dem Öffnen des am Pulvereinlass der Pulverförderkammer angeordneten Pulvereinlassventils beginnt. Alternativ oder zusätzlich hierzu kann die Pumpenfrequenz dadurch erhöht werden, indem die zur pneumatischen Betätigung des als Quetschventil ausgebildeten Pulvereinlassventils bzw. des als Quetschventil ausgebildeten Ausgangsventils vorgesehenen Kanäle zum Zuführen bzw. Abführen von Betätigungsdruckluft zu den Quetschventilen insgesamt möglichst verkürzt wird.

Zusätzlich hierzu ist es von Vorteil, wenn die Weglänge der Kanäle bzw. des Kanals zum Zuführen der Transportdruckluft zu der mindestens einen Pulverförderkammer bzw. die Weglänge der Kanäle bzw. des Kanals zum Anlegen eines Vakuums in der Pulverförderkammer verkürzt ist. Auf diese Weise können Reaktions-Verzögerungszeiten reduziert werden, wenn das Pulvereinlassventil bzw. das Pulverauslassventil angesteuert wird, und wenn in der mindestens einen Pulverförderkammer während der Saugphase ein Vakuum bzw. während der Abgabephase ein Überdruck angelegt wird.

Indem die Förderfrequenz der Pulverdichtstrompumpe entsprechend erhöht wird, ist eine hinreichende Homogenität in dem am Pulverauslass der Pulverdichtstrompumpe abgegebenen Pulverstrom gewährleistet.

Um die Homogenität des Pulverstromes am Pulverauslass der Pulverdichtstrompumpe weiter zu erhöhen, und um insbesondere das Auftreten von störenden Pulsationen im Pulverstrom stromabwärts des Pulverauslasses der Pulverdichtstrompumpe zu vermeiden, kommt gemäß bevorzugten Realisierungen der erfindungsgemäßen Lösung zusätzlich oder alternativ zu den zuvor genannten Maßnahmen eine Zusatzdruckluft-Einlassvorrichtung zum Einsatz. Diese Zusatzdruckluft-Einlassvorrichtung mündet an mindestens einer Stelle in den Pulverweg zwischen dem der mindestens einen Pulverförderkammer zugeordneten Pulverauslassventil und dem Pulverauslass der Pulverdichtstrompumpe oder vorzugsweise unmittelbar stromabwärts des Pulverauslasses der Pulverdichtstrompumpe und dient zum bedarfsweisen Zuführen von Zusatzdruckluft, die als zusätzliche Transportdruckluft dient. Mit anderen Worten, zusätzlich zu der während der Abgabephase der Pulverdichtstrompumpe in die Pulverförderkammer eingeleiteten Transportdruckluft wird mit Hilfe der Zusatzdruckluft-Einlassvorrichtung unmittelbar vor oder nach dem Pulverauslass der Pulverdichtstrompumpe zu geeigneten Zeiten bzw. Ereignissen zusätzlich Transportdruckluft eingespeist.

Zur Realisierung der mindestens einen Zusatzdruckluft-Einlassvorrichtung ist in bevorzugter Weise ein Filterrohr vorgesehen, durch welches der Pulverweg zwischen dem Pulverauslassventil und dem Pulverauslass der Pulverdichtstrompumpe zumindest bereichsweise verläuft. Vorzugsweise wird der Pulverweg stromabwärts des Pulverauslassventils der Pulverdichtstrompumpe auf einem Teil seiner Länge durch das Filterrohr hindurch geleitet. Das Filterrohr ist für Druckluft, jedoch nicht für die Partikel des Beschichtungspulvers durchlässig. Hierbei bietet es sich an, dass Filterrohr aus mikroporösem Material zu bilden, wie beispielsweise Sintermaterial. Das Filterrohr bildet eine Umfangswand um den Pulverweg und damit eine relativ große Fläche, durch welche bereits kleine Mengen Zusatzdruckluft durch das Filterrohr hindurch homogen in den Pulverweg strömen und Pulverpartikel im Sinne einer Vergleichmäßigung der Pulverkonzentration beeinflussen können.

Selbstverständlich ist es aber auch möglich, die Zusatzdruckluft-Einlassvorrichtung ohne Filterelement, insbesondere Filterrohr auszubilden. Das Filterelement bzw. Filterrohr dient lediglich dazu, zu verhindern, dass Pulverpartikel in eine mit dem Zusatzdruckluft-Einlassvorrichtung verbundene Zusatzdruckluftleitung eindringen können.

Um besonders wirkungsvoll Strömungspulsationen im Pulverweg stromabwärts des Pulverauslasses der Pulverdichtstrompumpe reduzieren oder vermeiden zu können, ist es von Vorteil, wenn über die Zusatzdruckluft-Einlassvorrichtung Zusatzdruckluft pulsierend in den Pulverweg nach dem Pulverauslassventil der Pulverdichtstrompumpe eingeleitet wird. Die Pulsfrequenz der Zusatzdruckluft sollte hierbei mindestens gleich groß wie die Frequenz der Pulverförderkammer sein, mit welcher Pulverportionen von der Pulverförderkammer abgegeben werden.

Gemäß bevorzugten Realisierungen der erfindungsgemäßen Pulverdichtstrompumpe ist vorgesehen, dass die Pulsfrequenz der Zusatzdruckluft gleich groß ist wie die Frequenz der Pulverförderkammer, d. h. die Frequenz, mit welcher Pulverportionen von der Pulverförderkammer abgegeben werden. In diesem Zusammenhang bietet es sich an, eine Vorrichtung zum Zuführen von pulsierender Zusatzdruckluft zu der mindestens einen Zusatzdruckluft-Einlassvorrichtung vorzusehen, wobei dieser Vorrichtung zum Zuführen von pulsierender Zusatzdruckluft in vorteilhafter Weise derart ausgebildet ist, dass die Zusatzdruckluft der mindestens einen Zusatzdruckluft-Einlassvorrichtung mit Bezug auf den Pulverabgabezyklus der Pulverförderkammer gegenphasig zuzuführen. Auf diese Weise kann erreicht werden, dass die Zusatzdruckluft immer dann in den Pulverweg nach dem Pulverauslassventil eingespeist wird, wenn das Pulverauslassventil geschlossen ist. Mit dieser Maßnahme kann insbesondere die Strömungsgeschwindigkeit in der Pulverleitung stromabwärts des Pulverauslasses der Pulverdichtstrompumpe einen konstanten Wert annehmen, ohne dass Fluktuationen auftreten.

Der vorliegenden Erfindung liegt insbesondere auch die Erkenntnis zugrunde, dass insbesondere bei einer als Ein-Kammer-Pulverdichtstrompumpe ausgebildeten Pulverdichtstrompumpe es von Vorteil ist, am Pulverauslass der Pulverdichtstrompumpe Zusatzdruckluft als zusätzliche Transportdruckluft einzuspeisen, wobei stromabwärts des Pulverauslasses der Pulverdichtstrompumpe das Pulver-LuftGemisch umso homogener durch die Pulverleitung strömt, wenn die während der Ansaugphase der Pulverförderkammer in den Pulverweg stromabwärts des Pulverauslassventils eingespeiste Menge an Zusatzdruckluft im Wesentlichen gleich groß ist wie die während der Pulverabgabephase in die Pulverförderkammer eingespeiste Menge an Transportdruckluft ist, welche zum pneumatischen Ausstoßen der in der Pulverförderkammer zuvor eingesaugten Pulverportion dient.

Um diese Erkenntnis bei der erfindungsgemäßen Pulverdichtstrompumpe zu realisieren, ist es einerseits denkbar eine Vorrichtung zum Zuführen von pulsierender Zusatzdruckluft zu der mindestens einen Zusatzdruck-Einlassvorrichtung vorzusehen, wobei diese Vorrichtung die Menge der in den Pulverweg eingespeisten Zusatzdruckluft an die Menge der in die Pulverförderkammer eingespeisten Transportdruckluft anpasst.

Auf eine aufwendige Druckluftmengen-Steuerung kann allerdings verzichtet werden, wenn erreicht wird, dass die beim Einspeisen der Transportdruckluft in die Pulverförderkammer und beim Einspeisen der Zusatzdruckluft in den Pulverweg auftretenden pneumatischen Widerstände einen im Wesentlichen gleichen Wert annehmen. Um dies zu erreichen, ist es von Vorteil, wenn zumindest die wesentlichen Bauteile der Zusatzdruckluft-Einlassvorrichtung, d. h. die Bauteile, die zum Einspeisen der Zusatzdruckluft in den Pulverweg benötigt werden, den gleichen Aufbau aufweisen, wie die wesentlichen Bauteile der Pulverförderkammer, d. h. die Bauteile der Pulverförderkammer, die zum Einspeisen der Transportdruckluft während der Abgabephase der Pulverförderkammer benötigt werden. Beispielsweise ist es in diesem Zusammenhang denkbar, dass die Zusatzdruckluft-Einlassvorrichtung eine Kammerwand aufweist, welche mindestens auf einem Teil ihrer Länge durch einen Filter gebildet ist, welcher den Pulverweg umgibt und von einer Zwischenkammer trennt, die den Filter umgibt und zwischen dem Filter und einem Gehäuse der Zusatzdruckluft-Einlassvorrichtung gebildet ist. Dabei sollte zumindest der Filter der Zusatzdruckluft-Einlassvorrichtung baugleich mit dem Filter der Pulverförderkammer sein.

Andererseits ist es ferner denkbar, wenn eine Steuereinrichtung vorgesehen ist, durch welche die Zusatzdruckluft-Frequenz vorzugsweise automatisch in Abhängigkeit von der Pulverabgabefrequenz der Pulverförderkammer einstellbar vorzugsweise automatisch steuerbar oder regelbar ist. Indem insbesondere die Pulsfrequenz der Zusatzdruckluft angepasst wird an die Frequenz der Pulverförderkammer, wobei in vorteilhafter Weise die Zusatzdruckluft immer dann in den Pulverweg nach dem Pulverauslassventil der Pulverdichtstrompumpe eingespeist wird, wenn sich die Pulverdichtstrompumpe in ihrer Saugphase befindet, in welcher das Pulvereinlassventil geöffnet und das Pulverauslassventil geschlossen ist, ist sichergestellt, dass immer eine ausreichende Menge an Transportdruckluft verwendet wird, die für den Transport des Beschichtungspulvers notwendig ist.

Selbstverständlich ist es aber auch denkbar, dass zusätzlich während der Abgabephase der Pulverdichtstrompumpe Zusatzdruckluft über die Zusatzdruckluft-Einlassvorrichtung in den Pulverweg nach dem Pulverauslassventil der Pulverdichtstrompumpe eingeleitet wird.

Indem jedoch nur dann mit Hilfe der Zusatzdruckluft-Einlassvorrichtung Zusatzdruckluft in den Pulverweg eingespeist wird, wenn sich die Pulverdichtstrompumpe in ihrer Saugphase befindet, können Ressourcen (Druckluft und somit Energie) für den Betrieb der Pulverdichtstrompumpe reduziert werden. Insbesondere wird dadurch auch verhindert, dass zu viel Transportdruckluft in dem Pulverweg stromabwärts des Pulverauslasses der Pulverdichtstrompumpe vorhanden ist, so dass vermieden wird, dass beim stromabwärts der Pulverdichtstrompumpe angeordneten Verbraucher (Pulversprühbeschichtungspistole oder dergleichen Einrichtung zum Versprühen von Beschichtungspulver) Pulverpartikel aus dem Sprühstrahl herausgetrieben werden.

In diesem Zusammenhang ist es insbesondere von Vorteil, wenn mit Hilfe einer Steuereinrichtung die pro Zeiteinheit durch die Zusatzdruckluft-Einlassvorrichtung hindurchströmende Zusatzdruckluftmenge, welche in den Pulverweg nach dem Pulverauslassventil der Pulverdichtstrompumpe eingeleitet wird, in Abhängigkeit von der insgesamt pro Zeiteinheit geförderten Pulvermenge einstellbar, vorzugsweise automatisch steuerbar oder regelbar ist.

Die Erfindung ist nicht nur auf eine Pulverdichtstrompumpe gerichtet, welche an ihrem Pulvereinlass mindestens ein Pulvereinlassventil und an ihrem Pulverauslass mindestens ein Pulverauslassventil aufweist, wobei im geöffneten Zustand das mindestens eine Pulvereinlassventil und/oder das mindestens eine Pulverauslassventil einen effektiven Strömungsquerschnitt aufweisen/aufweist, der mindestens 35% des effektiven Strömungsquerschnitts der mindestens einen Pulverförderkammer entspricht, sondern auch auf eine Pulversprühbeschichtungsvorrichtung zur Sprühbeschichtung von Gegenständen mit Beschichtungspulver, wobei die Pulversprühbeschichtungsvorrichtung eine Pulverdichtstrompumpe der zuvor beschriebenen Art sowie mindestens eine vorzugsweise automatisch und manuell ausgebildete Sprühbeschichtungspistole aufweist. Die Sprühbeschichtungspistole weist einen Beschichtungspulvereinlass auf, welcher über eine Pulverleitung mit dem Pulverauslass der Pulverdichtstrompumpe verbunden oder verbindbar ist.

Im Hinblick auf ein Verfahren zum Fördern von Beschichtungspulver von einem ersten Pulverreservoir zu einem stromabwärts des ersten Pulverreservoirs angeordneten zweiten Pulverreservoir oder zu einer stromabwärts des ersten Pulverreservoirs angeordneten Pulversprühbeschichtungspistole oder dergleichen Einrichtung zum Versprühen von Beschichtungspulver ist erfindungsgemäß vorgesehen, dass das Verfahren den Verfahrensschritt des Bereitstellens einer Pulversprühbeschichtungsvorrichtung der zuvor genannten Art, welche also die erfindungsgemäße Pulverdichtstrompumpe sowie mindestens eine Sprühbeschichtungspistole aufweist, und den Verfahrensschritt des Durchführens eines bestimmten Betriebszykluses aufweist, wobei dieser bestimmte Betriebszyklus folgende Zyklusschritte umfasst:
a) Erzeugen eines Unterdruckes in der mindestens einen Pulverförderkammer der Pulverdichtstrompumpe zum Einsaugen von Beschichtungspulver in die Pulverförderkammer durch ein geöffnetes Pulvereinlassventil der Pulverdichtstrompumpe, während das Pulverauslassventil der Pulverdichtstrompumpe geschlossen ist;
b) Verschließen des Pulvereinlassventils und Öffnen des Pulverauslassventils;
c) Einleiten von Druckgas in die Pulverförderkammer zum Abgeben des Beschichtungspulvers aus der Pulverförderkammer durch das offene Pulverauslassventil, während das Pulvereinlassventil geschlossen ist; und
d) Verschließen des Pulverauslassventils und Öffnen des Pulvereinlassventils.

Gemäß einem Aspekt des erfindungsgemäßen Verfahrens ist vorgesehen, dass beim Zyklusschritt a) oder beim Wechsel vom Zyklusschritt d) zum Zyklusschritt a) an mindestens einer Stelle in den Pulverweg nach dem Pulverauslassventil Zusatzdruckluft als zusätzliche Transportdruckluft eingespeist wird. Gemäß diesem Aspekt wird die Zusatzdruckluft in den Pulverweg vorzugsweise in einer Art und Weise eingespeist, die es zuvor im Zusammenhang mit der Pulverdichtstrompumpe beschrieben wurde.

Nachfolgend wird die Erfindung unter Bezugnahme auf die beiliegenden Zeichnungen anhand exemplarischen Ausführungsformen der erfindungsgemäßen Pulverdichtstrompumpe näher beschrieben.

In den Zeichnungen zeigen:
- FIG. 1:: schematisch eine Längsschnittdarstellung entlang des Pulverweges durch eine erste exemplarische Ausführungsform der erfindungsgemäßen Pulverdichtstrompumpe;
- FIG. 2:: schematisch eine Längsschnittdarstellung entlang des Pulverweges durch eine zweite exemplarische Ausführungsform der erfindungsgemäßen Pulverdichtstrompumpe;
- FIG. 3:: schematisch eine exemplarische Ausführungsform einer Pulversprühbeschichtungsvorrichtung, bei welcher eine Pulverdichtstrompumpe gemäß der vorliegenden Erfindung zum Einsatz kommt; und
- FIG. 4:: schematisch eine dritte exemplarische Ausführungsform der erfindungsgemäßen Pulverdichtstrompumpe.

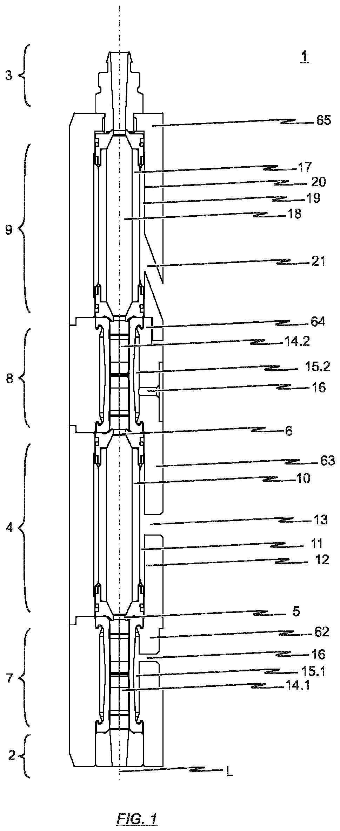

Nachfolgend werden unter Bezugnahme auf die Darstellungen in FIG.1, FIG. 2 und FIG. 4 exemplarische Ausführungsformen der erfindungsgemäßen Pulverdichtstrompumpe 1 beschrieben.

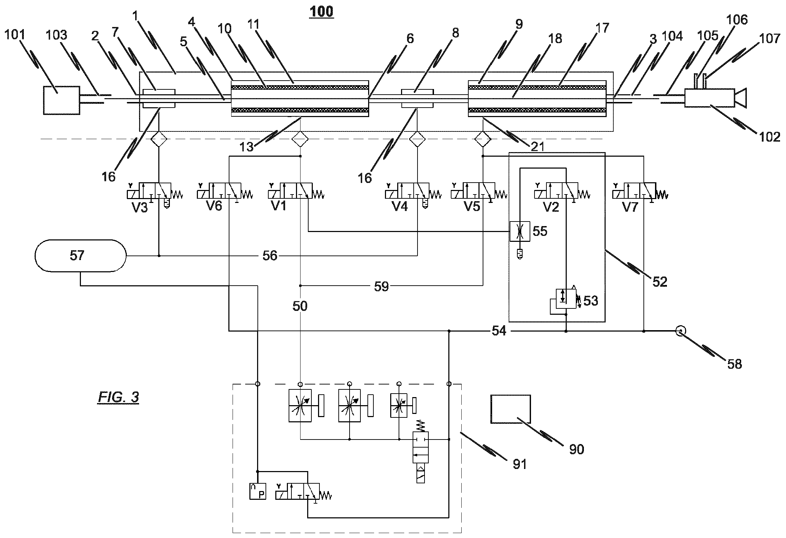

In FIG. 3 ist schematisch eine Pulversprühbeschichtungsvorrichtung 100 dargestellt, in welcher eine Ausführungsform der erfindungsgemäßen Pulverdichtstrompumpe 1 zum Fördern von Beschichtungspulver von einem ersten Pulverreservoir 101 zu einer stromabwärts von der Pulverdichtstrompumpe 1 angeordneten Pulversprühbeschichtungspistole 102 zum Einsatz kommt. Anstelle der Pulversprühbeschichtungspistole 102 kann auch eine andere Einrichtung zum Versprühen von Beschichtungspulver auf ein zu beschichtendes Objekt oder ein zweites Pulverreservoir zum Einsatz kommen.

Wie in FIG. 3 dargestellt, weist die dort zum Einsatz kommende exemplarische Ausführungsform der erfindungsgemäßen Pulverdichtstrompumpe 1 einen Pulvereinlass 2 auf, der mit Hilfe einer Pulverleitung 103, insbesondere mit Hilfe eines Ansaugrohres oder dergleichen, strömungsmäßig mit dem ersten Pulverreservoir 101 verbunden oder verbindbar ist. Am entgegen gesetzten Endbereich der Pulverdichtstrompumpe 1 ist ein Pulverauslass 3 vorgesehen, welcher mit Hilfe einer Pulverleitung 104, insbesondere mit Hilfe eines Pulverschlauches, mit einem Beschichtungspulvereinlass 105 der Pulversprühbeschichtungspistole 102 verbunden bzw. verbindbar ist.

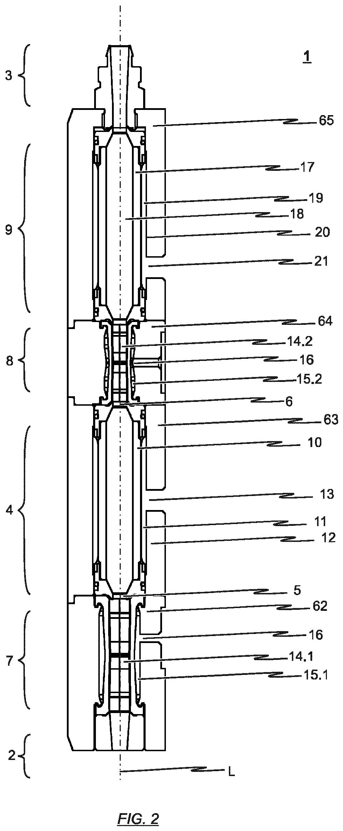

Im Einzelnen, und wie es insbesondere den Darstellungen in FIG. 1 und FIG. 2 entnommen werden kann, ist bei der ersten und zweiten exemplarischen Ausführungsform der erfindungsgemäßen Pulverdichtstrompumpe 1 insbesondere der Pulverauslass 3 der Pulverdichtstrompumpe 1 als Schlauchanschlussstutzen ausgebildet, an den die entsprechende Pulverleitung 104 aufsteckbar und mit einer Schlauchklemme fixierbar ist. Obgleich in FIG. 1 und FIG. 2 nicht gezeigt, ist es denkbar, auch den Pulvereinlass 2 der Pulverdichtstrompumpe 1 als Schlauchanschlussstutzen auszubilden, an den die entsprechende Pulverleitung 103 aufsteckbar und mit einer Schlauchklemme fixierbar ist.

Selbstverständlich kommen aber auch andere Ausführungsformen für den Pulvereinlass 2 bzw. den Pulverauslass 3 in Frage.

Die in den Zeichnungen exemplarisch dargestellten Pulverdichtstrompumpen 1 sind jeweils als Ein-Kammer-Pulverdichtstrompumpen ausgebildet, wobei zur Förderung von Beschichtungspulver von dem ersten Pulverreservoir 101 zu der Pulversprühbeschichtungspistole 102 bzw. zu einer anderen Einrichtung zur Sprühbeschichtung von Gegenständen oder zu einem weiteren Pulverreservoir nur eine einzige Pulverförderkammer 4 vorgesehen ist.

Die Erfindung ist jedoch nicht auf solche Ausführungsformen der Pulverdichtstrompumpe 1 beschränkt; vielmehr ist die erfindungsgemäße Lösung auch bei Pulverdichtstrompumpen 1 anwendbar, welche als Mehr-Kammer-Pulverdichtstrompumpen ausgebildet sind. Zur Vereinfachung wird jedoch nachfolgend die Erfindung im Zusammenhang mit als Ein-Kammer-Pulverdichtstrompumpen ausgeführten Pulverdichtstrompumpen 1 näher beschrieben. Die nachfolgenden Ausführungen sind entsprechend auf Mehr-Kammer-Pulverdichtstrompumpen entsprechend analog übertragbar.

Bei den exemplarischen Ausführungsformen der Pulverdichtstrompumpe 1 gemäß FIG. 1 und FIG. 2 weist die Pulverförderkammer 4 an einem ersten Endbereich einen Pulvereinlass 5 auf, welcher in Richtung des Pulvereinlasses 2 der Pulverdichtstrompumpe 1 zeigt. Ferner weist die Pulverförderkammer 4 einen in Richtung des Pulverauslasses 3 der Pulverdichtstrompumpe 1 zeigenden Pulverauslass 6 auf. Am Pulvereinlass 5 der Pulverförderkammer 4 ist unmittelbar angrenzend ein Pulvereinlassventil 7 angeordnet, und zwar derart, dass dieses Pulvereinlassventil 7 zwischen dem Pulvereinlass 5 der Pulverförderkammer 4 und dem Pulvereinlass 2 der Pulverdichtstrompumpe 1 liegt. In gleicher Weise ist unmittelbar angrenzend an den Pulverauslass 6 der Pulverförderkammer 4 ein Pulverauslassventil 8 angeordnet.

Im Unterschied zu dem Pulvereinlassbereich der Pulverdichtstrompumpe 1 ist am Pulverauslassbereich der Pulverdichtstrompumpe 1 das Pulverauslassventil 8 jedoch nicht unmittelbar zwischen dem Pulverauslass 6 der Pulverförderkammer und dem Pulverauslass 3 der Pulverdichtstrompumpe 1 angeordnet; vielmehr ist zwischen dem Pulverauslassventil 8 und dem Pulverauslass 3 der Pulverdichtstrompumpe 1 noch eine Zusatzdruckluft-Einlassvorrichtung 9 angeordnet.

Wie es anschließend näher beschrieben wird, dient diese Zusatzdruckluft-Einlassvorrichtung 9 zum bedarfsweisen Einspeisen von zusätzlicher Transportdruckluft in den Pulverweg zwischen dem Pulverauslassventil 8 und dem Pulverauslass 3 der Pulverdichtstrompumpe 1.

An dieser Stelle ist darauf hinzuweisen, dass es nicht zwingend erforderlich ist, die Zusatzdruckluft-Einlassvorrichtung 9 zwischen dem Pulverauslassventil 8 und dem Pulverauslass 3 der Pulverdichtstrompumpe 1 anzuordnen. Die mit der Zusatzdruckluft-Einlassvorrichtung 9 erzielbaren Effekte, die nachfolgend näher beschrieben werden, lassen sich auch dann realisieren, wenn die Zusatzdruckluft-Einlassvorrichtung 9 hinter dem Pulverauslass 3 der Pulverdichtstrompumpe 1 angeordnet ist.

Obwohl in den Zeichnungen nicht dargestellt, ist bei vorteilhaften Realisierungen der erfindungsgemäßen Pulverdichtstrompumpe 1 zwischen der Zusatzdruckluft-Einlassvorrichtung 9 und dem Pulverauslass 3 der Pulverdichtstrompumpe 1 noch ein weiteres Ventil, insbesondere Quetschventil vorgesehen, welches dann die Funktion des Pulverauslassventils übernimmt, da es unmittelbar am Pulverauslass 3 der Pulverdichtstrompumpe 1 angeordnet ist.

Wie es insbesondere der Darstellung in FIG. 1 und in FIG. 2 entnommen werden kann, liegen bei diesen exemplarischen Ausführungsformen der Pulvereinlass 2 der Pulverdichtstrompumpe 1, das Pulvereinlassventil 7, der Pulvereinlass 5 der Pulverförderkammer 4, die Pulverförderkammer 4, der Pulverauslass 6 der Pulverförderkammer 4, das Pulverauslassventil 8, die Zusatzdruckluft-Einlassvorrichtung 9 sowie der Pulverauslass 3 der Pulverdichtstrompumpe 1 entlang einer gemeinsamen Längsachse L. Mit anderen Worten, bei diesen Ausführungsformen ist der Pulvereinlass 2 der Pulverdichtstrompumpe 1 am entgegen gesetzten Ende des Pulverauslasses 3 der Pulverdichtstrompumpe 1 vorgesehen.

Nachfolgend werden der Aufbau und die Funktionsweise insbesondere der Pulverförderkammer 4 der in den Zeichnungen dargestellten exemplarischen Ausführungsform der Pulverdichtstrompumpe 1 näher beschrieben.

Wie es den Längsschnittdarstellungen in FIG. 1 und FIG.2 oder der schematischen Darstellung in FIG. 3 entnommen werden kann, ist die Pulverförderkammer 4 zwischen ihrem Pulvereinlass 5 und ihren Pulverauslass 6 durch die zylindrische Wand eines rohrartigen Filters 10 gebildet, welche für Luft, jedoch nicht für Beschichtungspulver durchlässig ist und beispielsweise aus Sintermaterial bestehen kann. Der als Filterrohr ausgebildete Filter 10 ist von einer Zwischenkammer 11 umgeben, die auf ihren Außenseite von einem Gehäuse 12 der Pulverförderkammer 4 begrenzt ist.

Durch das Gehäuse 12 mündet eine Luftaustauschöffnung 13, welche strömungsmäßig an ein Steuerventil V1 angeschlossen ist (vgl. FIG. 3). Über das Steuerventil V1 ist die Pulverförderkammer 4 wechselweise mit Transportdruckluft aus einer Druckluftversorgungsleitung 50 versorgbar oder mit Vakuum bzw. Unterdruck einer Vakuumquelle 52 beaufschlagbar.

Bei der in FIG. 3 schematisch dargestellten Ausführungsform der erfindungsgemäßen Pulversprühbeschichtungsvorrichtung 100 weist die Vakuumquelle 52 einen Injektor 55 auf, welchem bedarfsweise Injektordruckluft von einer Druckluftversorgungsleitung 54 bzw. einer Druckluftquelle 58, beispielsweise über einen Druckregler 53 und ein weiteres Steuerventil V2, zugeführt werden kann. Um während einer Saugphase der Pulverdichtstrompumpe 1 über den Pulvereinlass 2 der Pulverdichtstrompumpe 1 aus dem ersten Pulverreservoir 101 Beschichtungspulver in die Pulverförderkammer 4 einsaugen zu können, wird das am Pulverauslass 6 der Pulverförderkammer 4 angeordnete Pulverauslassventil 8 geschlossen und das zwischen dem Pulvereinlass 2 der Pulverdichtstrompumpe 1 und dem Pulvereinlass 5 der Pulverförderkammer 4 angeordnete Pulvereinlassventil 7 geöffnet. Gleichzeitig mit dem Betätigen des Pulverauslassventils 8 und des Pulvereinlassventils 7 oder unmittelbar anschließend daran wird über das Steuerventil V1 und der damit verbundenen Luftaustauschöffnung 13 die Pulverförderkammer 4 mit der Vakuumquelle 52 verbunden, so dass in der Pulverförderkammer 4 ein Unterdruck anliegt und Beschichtungspulver aus dem ersten Pulverreservoir 101 eingesaugt werden kann.

Nach dem Einsaugen von Beschichtungspulver in die Pulverförderkammer 4 erfolgt ein Wechsel von der Saugphase zu der Ausstoßphase von Beschichtungspulver aus der Förderkammer 4. Hierzu wird das Pulvereinlassventil 7 geschlossen und das Pulverauslassventil 8 geöffnet, während das Steuerventil V1 eine strömungsmäßige Verbindung der Luftaustauschöffnung 13 mit der Druckluftversorgungsleitung 50 bereitstellt, so dass die während der Saugphase in die Pulverförderkammer 4 zuvor eingesaugte Beschichtungspulverportion mittels der über die Luftaustauschöffnung 13 zugeführten Transportdruckluft durch das offene Pulverauslassventil 8 ausgestoßen wird.

Anschließend erfolgt wieder die Betriebsphase des Einsaugens von Beschichtungspulver über den Pulvereinlass 2 der Pulverdichtstrompumpe 1 und über das geöffnete Pulvereinlassventil 7. Dieser Wechsel der Betriebsphasen wiederholt sich ständig.

Hierin wird unter dem Begriff "Pumpenzyklus" ein Zyklus bestehend aus einer Saugphase und einer Ausstoßphase verstanden.

Die eingangs- und ausgangsseitig der Pulverförderkammer 4 angeordneten Ventile (Pulvereinlassventil 7, Pulverauslassventil 8) sind vorzugsweise jeweils als Quetschventil ausgebildet, wobei allerdings auch andere Ventiltypen grundsätzlich in Frage kommen.

Die bei der in den Zeichnungen dargestellten exemplarischen Ausführungsform jeweils als Quetschventil ausgebildeten Pulvereinlass- und Pulverauslassventile 7, 8 weisen jeweils einen flexiblen elastischen Schlauch 14.1, 14.2 auf, der als Ventilkanal dient. Der flexible elastische Schlauch 14.1, 14.2 ist zum Schließen des entsprechenden Ventils (Pulvereinlassventil 7, Pulverauslassventil 8) mittels Betätigungsdruckluft in einer den flexiblen elastischen Schlauch 14.1, 14.2 umgebenen Druckkammer 15.1, 15.2 zusammenquetschbar.

Zu diesem Zweck ist in jeder Druckkammer 15.1, 15.2 jeweils eine Luftaustauschöffnung 16 vorgesehen, die an ein entsprechendes Steuerventil V3, V4 angeschlossen ist. Die Steuerventile V3, V4 dienen dazu, wechselweise die Drucckammern 15.1, 15.2 der beiden jeweils als Quetschventil ausgebildeten Pulvereinlass- bzw. Pulverauslassventile 7, 8 mit Überdruck aus einer Druckluftversorgungsleitung 56 zu beaufschlagen.

Wie in FIG. 3 dargestellt, ist es denkbar, dass die Druckluftversorgungsleitung 56 mit einem Druckspeicher 57 strömungsmäßig verbunden oder verbindbar ist, wobei der Druckspeicher 57 seinerseits mit einer Druckluftquelle 58 strömungsmäßig verbunden oder verbindbar ist. Selbstverständlich ist es aber auch denkbar, dass die Druckluftversorgungsleitung 56 direkt mit der Druckluftquelle 58 (d.h. ohne Zwischenschaltung eines Druckspeichers 57) strömungsmäßig verbunden oder verbindbar ist.

Der flexible elastische Schlauch 14.1, 14.2 des als Quetschventil ausgebildeten Pulvereinlassventils 7 bzw. Pulverauslassventils 8 hat vorzugsweise eine solche Elastizität oder Eigenspannung, dass er sich nach Wegfall des Drucks der Betätigungsdruckluft in der Druckkammer 15.1, 15.2 selbsttätig wieder streckt und dadurch den entsprechenden Ventilkanal öffnet. Um das Öffnen der Quetschventile zu unterstützen und somit die realisierbare Schaltfrequenz der Pulverdichtstrompumpe 1 zu erhöhen, ist es denkbar, dass über die entsprechenden Luftaustauschöffnungen 16 ein Unterdruck angelegt wird.

Bei der erfindungsgemäßen Lösung ist insbesondere vorgesehen, dass im jeweils geöffneten Zustand das Pulvereinlassventil 7 und/oder das Pulverauslassventil 8 einen effektiven Strömungsquerschnitt aufweisen/aufweist, der mindestens 35% des effektiven Strömungsquerschnitts der Pulverförderkammer 4 entspricht. Mit anderen Worten, das Pulvereinlassventil 7 und/oder das Pulverauslassventil 8 sind/ist bei der erfindungsgemäßen Pulverdichtstrompumpe 1 bewusst überdimensioniert ausgebildet, so dass das entsprechende Ventil 7, 8 im geöffneten Zustand einen effektiven Strömungsquerschnitt aufweist, der größer ist, als der Strömungsquerschnitt, welcher eigentlich erforderlich wäre, um innerhalb der zur Verfügung stehenden Ansaugphase bzw. Ausstoßphase die Pulverförderkammer 4 mit dem zu fördernden Pulver vollständig zu füllen bzw. die Pulverförderkammer 4 vollständig zu entleeren.

Auf diese Weise kann das Risiko einer Klumpenbildung beim Ansaug- bzw. Ausstoßprozess deutlich reduziert werden kann, und zwar insbesondere auch bei Pulversorten, die zur Klumpenbildung neigen. Darüber hinaus ist die Reaktionszeit der Ventile 7, 8 deutlich erhöht, so dass der Umschaltzyklus zwischen einer Pulveransaugphase und einer Pulverausstoßphase noch weiter erhöht werden kann, was wiederum einen positiven Effekt auf eine stetige und kontinuierliche Pulverförderung hat.

Bei der in FIG. 1 gezeigten exemplarischen Ausführungsform der erfindungsgemäßen Pulverdichtstrompumpe 1 sind das Pulvereinlassventil 7 und das Pulverauslassventil 8 jeweils zumindest im Wesentlichen gleich dimensioniert oder gar identisch aufgebaut. In jedem Fall sind bei dieser exemplarischen Ausführungsform der erfindungsgemäßen Pulverdichtstrompumpe 1 die beiden Ventile 7, 8 derart überdimensioniert ausgeführt, dass diese im jeweils geöffneten Zustand einen effektiven Strömungsquerschnitt aufweisen, der mindestens 35% des effektiven Strömungsquerschnitts der Pulverförderkammer 4 entspricht.

Insbesondere ist bei der in FIG. 1 gezeigten exemplarischen Ausführungsform der erfindungsgemäßen Pulverdichtstrompumpe 1 vorgesehen, dass das Pulvereinlassventil 7 und das Pulverauslassventil 8 im jeweils geöffneten Zustand einen zumindest im Wesentlichen gleichen effektiven Strömungsquerschnitt aufweisen. Diese Ausführungsform hat den Vorteil, dass für das Pulvereinlassventil 7 und das Pulverauslassventil 8 baugleiche Ventile verwendet werden können, was Vorteile im Hinblick auf Wartung und Bevorratung von Ersatzteilen mit sich bringt.

Bei der in FIG. 2 gezeigten exemplarischen Ausführungsform der erfindungsgemäßen Pulverdichtstrompumpe 1 hingegen ist vorgesehen, dass nur das Pulvereinlassventil 7 entsprechend überdimensional ausgeführt ist, während das Pulverauslassventil 8 entsprechend kleiner ausgebildet ist. Dieser Ausführungsform liegt die Erkenntnis zugrunde, dass das Pulvereinlassventil 7 der Pulverdichtstrompumpe 1 maßgeblich ausschlaggebend für die Regulierung des von der Pulverdichtstrompumpe 1 pro Zeiteinheit tatsächlich förderbaren Pulverstromes ist.

Bei der in FIG. 2 gezeigten exemplarischen Ausführungsform der erfindungsgemäßen Pulverdichtstrompumpe 1 ist somit vorgesehen, dass im geöffneten Zustand des Pulvereinlassventils 7 dieses einen effektiven Strömungsquerschnitt aufweist, welcher größer ist als ein effektiver Strömungsquerschnitt des Pulverauslassventils in seinem geöffneten Zustand. Vorzugsweise ist dabei der effektive Strömungsquerschnitt des geöffneten Pulvereinlassventils 7 um mindestens 50%, vorzugsweise um mindestens 100% und noch bevorzugter um mindestens 250% größer als der effektive Strömungsquerschnitt des geöffneten Pulverauslassventils 8 ausgebildet.

Durch die größere Geometrie Pulvereinlassventils 7 und/oder des Pulverauslassventils 8 erfährt das Pulver weniger Widerstand und Stress während dem Ansaugprozess und ein Verstopfen wird dadurch verhindert.

Zwar ist bei einem größeren Quetschventil-Schlauch 14.1, 14.2 der zum Schließen des Ventils 7, 8 aufzubringende Quetschdruck höher, dafür sind die Öffnung- und Schließzeiten umso schneller, was der Kontinuität der Pulverfördermenge zugutekommt. Auch zeigt sich eine deutlich gesteigerte Lebensdauer der Quetschventil-Schläuche 14.1, 14.2.

Bei der in FIG. 2 gezeigten Ausführungsform der erfindungsgemäßen Pulverdichtstrompumpe 1 ist der Quetschventil-Schlauch 14.2 des Pulverauslassventiles 8 in seiner üblichen, aus dem Stand der Technik bekannten Dimensionierung erhalten. Somit sind bei in FIG. 2 gezeigten Ausführungsform der erfindungsgemäßen Pulverdichtstrompumpe 1 für das Pulvereinlassventil 7 und das Pulverauslassventil 8 zwei verschiedene Größen verbaut, was auch eine Verwechslung ausschließt.

Um bei den in den Zeichnungen dargestellten exemplarischen Ausführungsformen der erfindungsgemäßen Pulverdichtstrompumpe 1 stromabwärts des Pulverauslasses 3 der Pulverdichtstrompumpe 1 einen homogenen Pulverstrom ohne störende Pulsationen zu erreichen, sind bei der erfindungsgemäßen Lösung verschiedene Maßnahmen vorgesehen.

Beispielsweise ist die Pulverdichtstrompumpe 1 strukturell derart konstruiert und aufgebaut, dass die mit der Pulverdichtstrompumpe 1 erzielbare Pumpfrequenz im Vergleich zu der bei herkömmlichen Mehr-Kammer-Pulverdichtstrompumpen erreichbaren Pumpfrequenz erhöht werden kann. Zu diesem Zweck kommt bei der erfindungsgemäßen Lösung ein Materialblock (nicht explizit dargestellt) zum Einsatz, an welchem bei vorteilhaften Realisierungen der erfindungsgemäßen Pulverdichtstrompumpe 1 das zur Förderung von Beschichtungspulver erforderliche Pulvereinlassventil 7 sowie das ebenfalls zur Förderung von Beschichtungspulver erforderliche Pulverauslassventil 8 einschließlich der zur Betätigung dieser Ventile 7, 8 erforderlichen Steuerventile V3, V4 befestigt sein können (in den Zeichnungen nicht explizit gezeigt). Sowohl das Pulvereinlassventil 7 als auch das Pulverauslassventil 8 und die zur Betätigung hierfür erforderlichen Steuerventile V3, V4 sind vorzugsweise an Kanälen angeschlossen, die in dem Materialblock ausgebildet sind (nicht in den Figuren dargestellt). Das gleiche gilt auch für das Steuerventil V1, welches über mindestens einen in dem Materialblock ausgebildeten Kanal strömungsmäßig mit der Luftaustauschöffnung 13 der Pulverförderkammer 4 verbunden ist.

Dadurch, dass bei exemplarischen Ausführungsformen der erfindungsgemäßen Pulverdichtstrompumpe 1 die entsprechenden Steuerventile V1, V3 und V4 sowie das Pulvereinlass- und Pulverauslassventil 7, 8 möglichst dicht an den zu schaltenden Komponenten der Pulverdichtstrompumpe 1 angeordnet sind, wird vermieden, dass in den entsprechenden Druckleitungen zu den pneumatisch zu betätigenden Ventilen 7, 8 bzw. in der entsprechenden Druckleitung zu der Luftaustauschöffnung 13 der Pulverförderkammer 4 große Volumina vorliegen, welche beim wechselweisen Betrieb der Pulverdichtstrompumpe 1 wahlweise evakuiert oder mit Druckluft gefüllt werden müssen. Dadurch kann verhindert werden, dass übermäßige Reaktions-Verzögerungszeiten auftreten, was letztendlich auch die Frequenz begrenzen würde, mit welcher die Pulverdichtstrompumpe 1 Beschichtungspulver fördern kann.

Wie es insbesondere den Darstellungen in FIG. 1 und FIG. 2 entnommen werden kann, weist die Pulverdichtstrompumpe 1 in vorteilhafter Weise einen modularen Aufbau auf, bei welchem die Komponenten "Pulvereinlass 2 der Pulverdichtstrompumpe 1", "Pulvereinlassventil 7", "Pulverförderkammer 4", "Pulverauslassventil 8" und "Zusatzdruckluft-Einlassvorrichtung 9" zusammen mit "Pulverauslass 3 der Pulverdichtstrompumpe 1" jeweils als modulares Bauteil ausgebildet sind. Das Modul, welches den Pulvereinlass 2 der Pulverdichtstrompumpe 1 bildet, ist in den Zeichnungen nicht explizit dargestellt, während das stromabwärts hiervon angeordnete Modul 62 das Pulvereinlassventil 7 begründet. Die Module 63 und 64 bilden die Pulverförderkammer 4 und das Pulverauslassventil 8, während das Modul 65 die Kombination aus der Zusatzdruckluft-Einlassvorrichtung 9 und dem Pulverauslass 3 der Pulverdichtstrompumpe 1 bildet. Die einzelnen Module 62, 63, 64 und 65 sind axial mit Bezug auf die gemeinsame Längsachse L ausgerichtet und hintereinander auf dem Materialblock montiert.

Der modulare Aufbau der Pulverdichtstrompumpe 1 vereinfacht die Wartung der Pumpe erheblich, da im Bedarfsfall, beispielsweise bei einem Defekt oder zum Zwecke der Wartung und/oder Reinigung, die einzelnen Module 62, 63, 64 und 65 der Pumpe mit den entsprechenden Komponenten besonders leicht und insbesondere schnell ausgetauscht werden können.

Dadurch, dass bei den in den Zeichnungen dargestellten exemplarischen Ausführungsformen der erfindungsgemäßen Pulverdichtstrompumpe 1 insgesamt nur zwei vorzugsweise als Quetschventile ausgebildete Pulverventile (Pulvereinlassventil 7 und Pulverauslassventil 8) zum Einsatz kommen, ist die Störanfälligkeit der Pumpe im Vergleich zu Mehr-Kammer-Pulverdichtstrompumpen, bei denen mindestens vier Pulverventile und eine entsprechend höhere Anzahl an Steuerventile zur Ansteuerung der Pulverventile zum Einsatz kommen müssen, deutlich reduziert. Insbesondere ist die Anzahl der Verschleißteile bei der erfindungsgemäßen Pulverdichtstrompumpe 1 auf ein Minimum reduziert, so dass eine Korrektur der Einstellungen der Pulverdichtstrompumpe 1 aufgrund von Verschleißteilen wesentlich seltener durchzuführen und eine hohe Reproduzierbarkeit der Einstellungen der Pumpe gewährleistet ist.

Darüber hinaus erlaubt das bei den in den Zeichnungen dargestellten exemplarischen Ausführungsformen der erfindungsgemäßen Pulverdichtstrompumpe 1 verwendete Ein-Kammer-Design einen besonders kompakten Aufbau der Pumpe. So ist beispielsweise bei einer Pulverdichtstrompumpe 1 mit einer Pumpenlänge von ca. 250 mm eine Pulverförderung von bis zu 400 g Beschichtungspulver pro Minute realisierbar (Breite der Pumpe: 40 mm).

Bei den in den Zeichnungen dargestellten exemplarischen Ausführungsformen der erfindungsgemäßen Pulverdichtstrompumpe 1 ist zur Reduzierung bzw. Vermeidung von Pulsationen stromabwärts des Pulverauslasses 3 der Pulverdichtstrompumpe 1 insbesondere aber die bereits erwähnte Zusatzdruckluft-Einlassvorrichtung 9 vorgesehen, welche am Ausgang des Pulverauslassventils 8 bzw. am Pulverauslass 3 der Pulverdichtstrompumpe 1 vorgesehen ist, um dort bedarfsweise Zusatz-Transportdruckluft in den Pulverweg einspeisen zu können. Bei den in den Zeichnungen dargestellten exemplarischen Ausführungsformen der erfindungsgemäßen Pulverdichtstrompumpe 1 verwendeten Realisierungen der Zusatzdruckluft-Einlassvorrichtung 9 weist diese ein Filterrohr 17 auf, welches einen Umfang von mindestens 180° (bei den dargestellten Ausführungsformen einen Umfang von 360°) hat und zumindest auf einer Teillänge des entsprechenden Pulverweges eine Kanalwandinnenfläche auf mindestens 180° (bei den in den Zeichnungen dargestellten Ausführungsformen eine Kanalwandinnenfläche auf 360°) des Pulverwegumfanges bildet.

Mit anderen Worten, bei den dargestellten Ausführungsformen der erfindungsgemäßen Pulverdichtstrompumpe 1 weist die Zusatzdruckluft-Einlassvorrichtung 9 ein Filterrohr 17 auf, welches den entsprechenden Pulverweg zumindest auf einer Teillänge um 360° umgibt, so dass die von der Pulverförderkammer 4 der Pulverdichtstrompumpe 1 während einer Pulverausstoßphase ausgestoßene Pulverportion durch den von dem Filterrohr 17 gebildeten Filterrohrkanal 18 homogen hindurchströmen kann.

Eine bei der in den Zeichnungen dargestellten Ausführungsform als Druckluftringkammer ausgebildete Druckluftkammer 19 umgibt das Filterrohr 17 auf seinem Außenumfang. Die hier als Druckluftringkammer ausgebildete Druckluftkammer 19 wird an ihrem radial inneren Umfang von dem Filterrohr 17 und mit Abstand von dem Filterrohr 17 an ihrem radial äußeren Umfang von einem Gehäuse 20 umgeben. In dem Gehäuse 20 ist eine Luftaustauschöffnung 21 eingebracht, über welche bedarfsweise Druckluft von einer Druckluftleitung 59 über ein Steuerventil V5 in die Druckluftkammer 19 und von dort durch das Filterrohr 17 in den Filterrohrkanal 18 strömen kann.

Abhängig von der pro Zeiteinheit in den Pulverweg einzuspeisenden Menge an Zusatz-Transportdruckluft ist die Druckluftkammer 19 und der von dem Filterrohr 17 gebildete Filterrohrkanal 18 entsprechend großvolumiger auszuführen.

Wie bereits ausgeführt, besteht das Filterrohr 17 der Zusatzdruckluft-Einlassvorrichtung 9 aus mikroporösem Material derart, dass es für Luft, jedoch nicht für Beschichtungspulver durchlässig ist. Das Filterrohr 17 besteht vorzugsweise aus einem Sinterkörper, beispielsweise aus Metall oder Kunststoff, oder aus einer Metall oder Kunststoff enthaltenden Materialmischung. Ferner kann es aus einem anderen Material bestehen und/oder durch eine Filtermembran gebildet sein.

Die Filterporen des Filterrohres 17 sind vorzugsweise derart ausgebildet, dass Druckluft über einen sowohl in Umfangsrichtung als auch in Längsrichtung des Pulverweges großen Pulverwegbereich in den Pulverweg geleitet wird. Diese Mikroporen des Pulverrohres 17 können radial oder in axialer Richtung zum Pulverweg geneigt sein und/oder tangential zum Pulverwegumfang aus dem Filterrohr 17 in den Filterrohrkanal 18 ausmünden und die Druckluft entsprechend richten. Durch die große Oberfläche des Filterrohres 17 an seinem Innenumfang kann mit einer geringen Menge von Druckluft die axiale Pulververteilung im Filterrohrkanal 18 und damit auch im Pulverweg stromabwärts des Pulverauslasses 3 der Pulverdichtstrompumpe 1 homogenisiert werden. Dadurch können Pulsationen der Pulverströmung im Pulverweg vermieden oder zumindest reduziert werden. Ferner kann eine Homogenisierung der Pulverdichte in Längsrichtung und über den Querschnitt des Pulverweges erzielt werden.

Die in den Pulverweg eingespeiste Transportdruckluftmenge pro Zeiteinheit kann so gering gehalten werden, dass sie keinen oder nur einen geringen Einfluss auf die Strömungsgeschwindigkeit des Beschichtungspulvers im Strömungsweg hat. Zusätzlich besteht die Möglichkeit, durch Erhöhung des Druckes der mit Hilfe der Zusatzdruckluft-Einlassvorrichtung 9 zusätzlich eingespeisten Transportdruckluft die Strömungsmenge zu erhöhen, um die Strömungsgeschwindigkeit des Beschichtungspulvers zu beeinflussen.

Die mit der Zusatzdruckluft-Einlassvorrichtung 9 in den Pulverweg der Pulverdichtstrompumpe 1 bedarfsweise zusätzlich eingespeiste Druckluft kann in Form von Strahlen oder in Form von kleinen Luftblasen von dem Filterrohr 17 in den Filterrohrkanal 18 strömen, und zwar abhängig von der Art der Filterporen und dem Luftdruck.

Das Filterrohr 17 der Zusatzdruckluft-Einlassvorrichtung 9 sollte sich über mindestens 180° des Pulverwegumfanges, vorzugsweise über die vollen 360° des Pulverwegumfanges, um den Pulverweg herum erstrecken.

Das Filterrohr 17 der Zusatzdruckluft-Einlassvorrichtung 9 ist vorzugsweise ein steifer Körper. Es könnte aber auch ein flexibler Körper sein.

Gemäß einer bevorzugten Ausführungsform der Erfindung wird die Zusatzdruckluft der Zusatzdruckluft-Einlassvorrichtung 9 pulsierend mit einer Pulsfrequenz zugeführt, welche vorzugsweise gleich groß oder ggf. größer als die Frequenz der Pulverförderkammer 4 ist, mit welcher die Pulverförderkammer 4 Pulverportionen abgibt. Zu diesem Zweck kann eine pulsierende Druckluftquelle oder ein Druckluftpulsgeber für die Zusatzdruckluft-Einlassvorrichtung 9 vorgesehen werden.

Gemäß einer weiteren vorteilhaften Ausführungsform der Erfindung ist eine Steuereinrichtung 90 vorgesehen, welche derart ausgebildet ist, dass die Pulsfrequenz der der Zusatzdruckluft-Einlassvorrichtung 9 zugeführten Zusatzdruckluft in Abhängigkeit von der Pulverabgabefrequenz der Pulverförderkammer 4 nach mindestens einer der folgenden Arten einstellbar ist: beispielsweise manuell einstellbar ist und/oder vorzugsweise automatisch steuerbar oder vorzugsweise regelbar ist. In vorteilhafter Weise kann dadurch die Zusatzdruckluft-Pulsfrequenz mit zunehmender Pulverabgabefrequenz erhöht und mit abnehmender Pulverabgabefrequenz reduziert werden.

Gemäß einer weiteren bevorzugten Ausführungsform der Erfindung kann die Steuereinrichtung 90 in vorteilhafter Weise derart ausgebildet sein, dass mittels ihr die pro Zeiteinheit durch die Zusatzdruckluft-Einlassvorrichtung 9 hindurchströmende Zusatzdruckluftmenge in Abhängigkeit von der geförderten Pulvermenge nach mindestens einer der folgenden Arten einstellbar ist: beispielsweise manuell einstellbar ist und/oder vorzugsweise automatisch steuerbar oder vorzugsweise regelbar ist.

Die Steuereinrichtung 90 der Pulversprühbeschichtungsvorrichtung 100 kann zur genannten Einstellung der Zusatzdruckluft-Pulsfrequenz oder zu der genannten Einstellung der Zusatzdruckluftmenge, oder für beide Einstellungen ausgebildet sein. Die Steuereinrichtung 90 kann alle Steuerelemente enthalten oder es können zwei oder mehr Steuereinrichtungen vorgesehen werden. Falls es erwünscht ist, die Zusatzdruckluft-Pulsfrequenz oder die Zusatzdruckluft-Strömungsmenge manuell einzustellen, kann hierfür jeweils ein manuelles Einstellelement vorgesehen werden.

Wie bereits angedeutet, ist das Pulvereinlassventil 7 und das Pulverauslassventil 8 der erfindungsgemäßen Pulverdichtstrompumpe 1 jeweils vorzugsweise als Quetschventil (engl.: pinch valve) ausgeführt, da sich in Quetschventilen weniger Beschichtungspulver ablagern kann als in anderen Ventilarten, und weil sich Pulverablagerungen durch die Luftströmung in ihnen leicht reinigen lassen. Quetschventile sind mittels Druckluft oder mittels Unterdruck steuerbare Ventile. Vom Prinzip her sind jedoch auch andere steuerbare Ventile verwendbar. Ferner besteht auch die Möglichkeit, anstelle von steuerbaren Ventilen selbsttätige Ventile zu verwenden, beispielsweise Kugelventile oder Klappenventile, welche durch den Differenzdruck zwischen der Ventileinlassseite und der Ventilauslassseite und damit automatisch von dem Überdruck und Unterdruck gesteuert werden, welcher in der Pulverförderkammer 4 herrscht.

Zur Steuerung des Betriebes der Pulverdichtstrompumpe 1 kommt die bereits erwähnte Steuereinrichtung 90 zum Einsatz, welche in FIG. 3 schematisch angedeutet ist. Die Steuereinrichtung 90 ist ausgebildet, die einzelnen ansteuerbaren Komponenten der Pulverdichtstrompumpe 1, insbesondere die Steuerventile V1, V2, V3, V4 und V5, geeignet anzusteuern und deren Betätigung zu koordinieren.

Bei der in FIG. 3 schematisch dargestellten Ausführungsform der erfindungsgemäßen Pulversprühbeschichtungsvorrichtung 100 ist noch ein weiteres Steuerventil V6 vorgesehen, über welches in einem Reinigungszyklus der Pulverdichtstrompumpe 1 die Pulverförderkammer 4 mit Hochdruck beaufschlagbar ist.

Die Steuereinrichtung 90 ist vorzugsweise derart ausgebildet, dass diese zur Vorbereitung der Saugphase der Pulverförderkammer 4 das Steuerventil V4 öffnet, so dass die in dem Druckspeicher 57 bzw. von der Druckluftquelle 58 bereitgestellte Druckluft über die Druckluftversorgungsleitung 56 und der Luftaustauschöffnung 16 in die Druckkammer 15.2 des als Quetschventil ausgebildeten Pulverauslassventils 8 geleitet wird. Als Folge hiervon wird der flexible elastische Schlauch 14.2 des als Quetschventil ausgebildeten Pulverauslassventils 8 zusammengequetscht, infolgedessen der von dem flexiblen elastischen Schlauch 14. 2 bereitgestellte Pulverweg durch das Pulverauslassventil 8 geschlossen wird.

Mit dem Schließen des Pulverauslassventils 8 wird mit Hilfe der Steuereinrichtung 90 die in dem Gehäuse 12 der Pulverförderkammer 4 vorgesehene Luftaustauschöffnung 13 strömungsmäßig mit der Vakuumquelle 52 verbunden, um im Inneren der Pulverförderkammer 4 einen Unterdruck zu erzeugen, so dass Beschichtungspulver über den Pulvereinlass 2 der Pulverdichtstrompumpe 1 und das (geöffnete) Pulvereinlassventil 7 sowie den Pulvereinlass 5 der Pulverförderkammer 4 in die Pulverförderkammer 4 eingesaugt werden kann.

Gemäß bevorzugter Ausführungsformen der Erfindung wird zum Initiieren der Saugphase der Pulverdichtstrompumpe 1 von der Steuereinrichtung 90 ein Steuersignal zum Erzeugen des Unterdruckes in der Pulverförderkammer 4 frühestens gleichzeitig wie, oder vorzugsweise um eine vorbestimmte Verzögerungszeit später als ein Steuersignal zum Öffnen des Pulvereinlassventils 7 erzeugt, so dass der Aufbau des Unterdruckes in der Pulverförderkammer 4 frühestens gleichzeitig mit dem Öffnen des Pulvereinlassventils 7 beginnt, vorzugsweise um die genannte vorbestimmte Verzögerungszeit später als das Öffnen des Pulvereinlassventils 7. Die vorbestimmte Verzögerungszeit liegt vorzugsweise im Bereich zwischen 0 ms und 50 ms bei einem Förderzyklus der Pulverförderkammer 4 von ungefähr 200 ms.

Dadurch wird erreicht, dass der Unterdruck in der Pulverförderkammer 4 einer Öffnungsbewegung des Pulvereinlassventils 7, insbesondere wenn dieses ein Quetschventil ist, mindestens zum Zeitpunkt des Beginns der Öffnungsbewegung des Pulvereinlassventils 7, weniger stark entgegenwirkt als beim Stand der Technik, wo in der Regel bereits vor dem Öffnen des Pulvereinlassventils in der entsprechenden Pulverförderkammer eine Druckabsenkung stattfindet.

Anschließend wird das Steuerventil V3 strömungsmäßig mit der Druckluftversorgungsleitung 56 verbunden, infolgedessen ein Überdruck in der Druckkammer 15.1 des als Quetschventil ausgebildeten Pulvereinlassventils 7 angelegt wird, der ein Zusammenquetschen des flexiblen elastischen Schlauches 14.1 des als Quetschventil ausgebildeten Pulvereinlassventils 7 bewirkt. Auf diese Weise wird das Pulvereinlassventil 7 geschlossen. Das Steuerventil V4 schaltet die Luftaustauschöffnung 16 der Druckkammer 15.2 des als Quetschventil ausgebildeten Pulverauslassventils 8 drucklos bzw. entlüftet die Druckkammer 15.2. Aufgrund der Elastizität des Schlauches 14.2 des als Quetschventil ausgebildeten Pulverauslassventils 8 geht dieses dann unmittelbar in seinen geöffneten Zustand über.

In diesem Augenblick oder unmittelbar danach wird mit Hilfe der Steuereinrichtung 90 das Steuerventil V1 derart geschaltet, dass die in dem Gehäuse 12 der Pulverförderkammer 4 ausgebildete Luftaustauschöffnung 13 strömungsmäßig mit der Druckluftquelle 58 verbunden wird. Die Druckluft strömt dann über die Druckluftversorgungsleitung 50, das Steuerventil V1, die Zwischenkammer 11 und das Filterelement 10 in die Pulverförderkammer 4 und treibt die zuvor eingesaugte Pulverportion aus den Pulverauslass 6 der Pulverförderkammer 4 aus.

Mit Hilfe der über die Druckluftversorgungsleitung 50 in die Pulverförderkammer 4 eingespeisten Transportdruckluft wird die Pulverportion weiter durch das geöffnete Pulverauslassventil 8, den Filterrohrkanal 18 der Zusatzdruckluft-Einlassvorrichtung 9 und den Pulverauslass 3 der Pulverdichtstrompumpe 1 transportiert.

Die Steuereinrichtung 90 ist insbesondere ausgelegt, um über die Zusatzdruckluft-Einlassvorrichtung 9 pulsweise Zusatz-Transportdruckluft in den Pulverweg zwischen dem Pulverauslassventil 8 und dem Pulverauslass 3 der Pulverdichtstrompumpe 1 einzuspeisen. Hierbei hat es sich als Vorteil erwiesen, wenn die über die Zusatzdruckluft-Einlassvorrichtung 9 pulsweise in den Pulverweg eingespeiste Zusatz-Transportdruckluft immer während der gesamten oder während einer vorbestimmten oder vorbestimmbaren Teilperiode der Saugphase der Pulverförderkammer 4 eingespeist wird, um auf diese Weise wirksam Pulsationen in dem von der Pulverdichtstrompumpe 1 abgegebenen Pulverstrom zu vermeiden bzw. zu minimieren.

Im Einzelnen ist zu diesem Zweck die Steuereinrichtung 90 ausgeführt, die Luftaustauschöffnung 21 der Druckluftkammer 19 der Zusatzdruckluft-Einlassvorrichtung 9 immer dann mit der Druckluftquelle 58 strömungsmäßig zu verbinden, wenn das Pulverauslassventil 8 geschlossen ist.

Bei der in FIG. 3 dargestellten Ausführungsform der erfindungsgemäßen Pulversprühbeschichtungsvorrichtung 100 laufen die einzelnen Druckluftversorgungsleitungen 50, 54, 56 und 59 in ein Steuergerät 91, in welchem die Druckluftversorgung der einzelnen Komponenten der Pulversprühbeschichtungsvorrichtung 100 koordiniert und gesteuert wird. Insbesondere kann über das Steuergerät 91 auch die pro Zeiteinheit der Pulversprühbeschichtungspistole 102 über den Druckluft-Eingang 106 der Pulversprühbeschichtungspistole 102 zugeführte Menge an Zusatzdruckluft, welche zur Zerstäubung, zur Formung und/oder zur anderweitigen Beeinflussung des von der Pulversprühbeschichtungspistole 102 zu versprühenden Beschichtungspulvers dient, und/oder die pro Zeiteinheit der Pulversprühbeschichtungspistole 102 über den Druckluft-Eingang 107 der Pulversprühbeschichtungspistole 102 zugeführte Menge an Elektrodenspülluft eingestellt werden.

Wie es insbesondere der schematischen Darstellung in FIG. 3 entnommen werden kann, ist es von Vorteil, wenn zum Einspeisen der Zusatzdruckluft in den Pulverweg Komponenten zum Einsatz kommen, die baugleich mit den Komponenten der Pulverförderkammer hier sind, welche während der Abgabephase in die Pulverförderkammer 4 Transportdruckluft einspeisen. Unter dem hierin verwendeten Begriff "baugleich" ist insbesondere die Größe und der Aufbau des bei der Zusatzdruckluft-Einlassvorrichtung 9 verwendeten Filterrohres 17 und des bei der Pulverförderkammer 4 verwendeten Filters 10 zu verstehen. Auf diese Weise ist sichergestellt, dass die während der Abgabephase in die Pulverförderkammer 4 eingeleitete Transportdruckluft den gleichen pneumatischen Widerstand erfährt, wie die Zusatzdruckluft, die während der Pulveransaugphase über die Zusatzdruckluft-Einlassvorrichtung 9 in den Pulverweg stromabwärts des Pulverauslassventils 8 eingespeist wird.

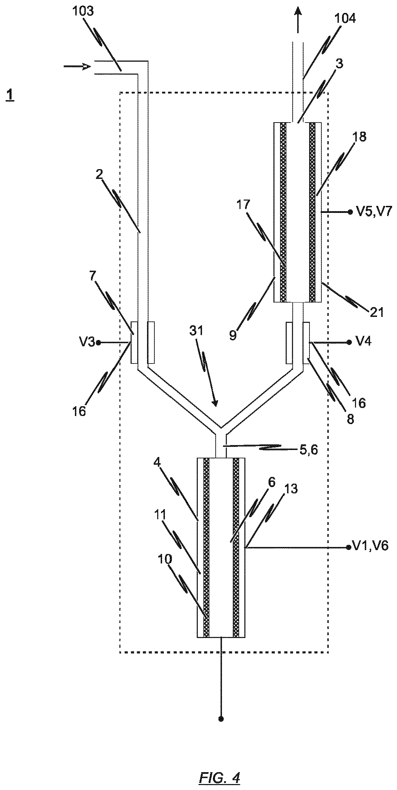

Die erfindungsgemäße Lösung ist nicht auf eine Pulverdichtstrompumpe 1 beschränkt, welche einen Pulvereinlass 2 an einem ersten Endbereich und einen Pulverauslass 3 an einem gegenüberliegenden zweiten Endbereich aufweist, wie es in den Darstellungen gemäß FIG. 1 bis 3 gezeigt ist. Vielmehr eignet sich die erfindungsgemäße Lösung auch für Ausführungsformen, bei welchen - wie in FIG. 4 schematisch dargestellt - die mindestens eine Pulverförderkammer 4 der Pulverdichtstrompumpe 1 an einem Endbereich einen Pulverdurchgang 30 aufweist, der sowohl als Pulvereinlass als auch als Pulverauslass für die Pulverförderkammer 4 dient.

Bei der in FIG. 4 dargestellten Ausführungsform ist der Pulvereinlass 2 der Pulverdichtstrompumpe 1 über das Pulvereinlassventil 7 und der Pulverauslass 3 der Pulverdichtstrompumpe 1 über das Pulverauslassventil 8 strömungsmäßig mit dem Pulverdurchgang 30 der Pulverförderkammer 4 verbunden. Insbesondere kommt hier ein Verteiler 31 zum Einsatz, der bei der in FIG. 4 dargestellten Ausführungsform als Y-Stück ausgebildet ist. Über diesen Verteiler 31 ist der Pulverdurchgang 30 der Pulverförderkammer 4 mit dem Pulvereinlassventil 7 einerseits und dem Pulverauslassventil 8 andererseits strömungsmäßig verbunden.

Bei der in FIG. 4 schematisch dargestellten Ausführungsform der Pulverdichtstrompumpe 1 ist die Zusatzdruckluft-Einlassvorrichtung 9 vorzugsweise identisch bzw. baugleich zu der Transportdruckluft-Einlassvorrichtung der Pulverförderkammer 4 ausgeführt ist, um die beim Einleiten der Transportdruckluft und beim Einleiten der Zusatzdruckluft auftretenden pneumatischen Widerstände gleichzusetzen.

Der Aufbau und die Funktionsweise der übrigen Komponenten der in FIG. 4 dargestellten Ausführungsform entsprechen den Komponenten der Ausführungsformen gemäß FIG. 1 bis FIG. 3, wobei in diesem Zusammenhang auf die vorherigen Ausführungen verwiesen wird.

## Patentansprüche

1. Pulverdichtstrompumpe (1) zum Fördern von Beschichtungspulver von einem ersten Pulverreservoir (101) zu einem zweiten stromabwärts angeordneten Pulverreservoir oder einer stromabwärts angeordneten Pulversprühbeschichtungspistole (102) oder dergleichen Einrichtung zum Versprühen von Beschichtungspulver, wobei die Pulverdichtstrompumpe (1) mindestens eine Pulverförderkammer (4) aufweist, welche über einen Pulvereinlass (2) mit dem ersten Pulverreservoir (101) und über einen Pulverauslass (3) mit dem zweiten Pulverreservoir bzw. mit der Pulversprühbeschichtungspistole (102) oder dergleichen Einrichtung zum Versprühen von Beschichtungspulver strömungsmäßig verbunden oder verbindbar ist, wobei am Pulvereinlass (2) mindestens ein Pulvereinlassventil (7) und am Pulverauslass (3) mindestens ein Pulverauslassventil (8) vorgesehen ist,
**dadurch gekennzeichnet,**
**dass** im jeweils geöffneten Zustand das mindestens eine Pulvereinlassventil (7) und/oder das mindestens eine Pulverauslassventil (8) einen effektiven Strömungsquerschnitt aufweisen/aufweist, der mindestens 35% des effektiven Strömungsquerschnitts der mindestens einen Pulverförderkammer (4) entspricht; und
**dass** die Pulverdichtstrompumpe (1) als Ein-Kammer-Pulverdichtstrompumpe ausgebildet ist und zur Förderung von Beschichtungspulver nur eine einzige Pulverförderkammer (4) aufweist.

2. Pulverdichtstrompumpe (1) nach Anspruch 1,
wobei das mindestens eine Pulvereinlassventil (7) und das mindestens eine Pulverauslassventil (8) im jeweils geöffneten Zustand einen zumindest im Wesentlichen gleichen effektiven Strömungsquerschnitt aufweisen.

3. Pulverdichtstrompumpe (1) nach Anspruch 1,
wobei im geöffneten Zustand des Pulvereinlassventils (7) dieses einen effektiven Strömungsquerschnitt aufweist, welcher größer ist als ein effektiver Strömungsquerschnitt des Pulverauslassventils (8) in seinem geöffneten Zustand.

4. Pulverdichtstrompumpe (1) nach Anspruch 3,
wobei der effektive Strömungsquerschnitt des mindestens einen geöffneten Pulvereinlassventils (7) um mindestens 50%, vorzugsweise um mindestens 100 % und noch bevorzugter um mindestens 250% größer als der effektive Strömungsquerschnitt des mindestens einen geöffneten Pulverauslassventils (8) ausgebildet ist.

5. Pulverdichtstrompumpe (1) nach einem der Ansprüche 1 bis 4,
wobei die mindestens eine Pulverförderkammer (4) an einem ersten Endbereich den Pulvereinlass (2) und an einem gegenüberliegenden zweiten Endbereich den Pulverauslass (3) aufweist, wobei das mindestens eine Pulvereinlassventil (7) und das mindestens eine Pulverauslassventil (8) jeweils an gegenüberliegenden Endbereichen der mindestens einen Pulverförderkammer (4) angeordnet sind.

6. Pulverdichtstrompumpe (1) nach einem der Ansprüche 1 bis 4,
wobei die mindestens eine Pulverförderkammer (4) an einem Endbereich einen Pulverdurchgang aufweist, der sowohl als Pulvereinlass (2) als auch als Pulverauslass (3) dient, wobei das mindestens eine Pulvereinlassventil (7) und das mindestens eine Pulverauslassventil (8) jeweils in dem Pulverdurchgang (30) vorgesehen sind.

7. Pulverdichtstrompumpe (1) nach Anspruch 6,
wobei ferner ein Verteiler (31), insbesondere in Gestalt eines Y-Stückes, vorgesehen ist zum strömungsmäßigen Verbinden des Pulverdurchgangs (30) der mindestens einen Pulverförderkammer (4) mit dem mindestens einen Pulvereinlassventil (7) einerseits und dem mindestens einen Pulverauslassventil (8) andererseits.

8. Pulverdichtstrompumpe (1) nach einem der Ansprüche 1 bis 7,
wobei ferner eine Steuereinrichtung (90) vorgesehen ist zum Ansteuern des mindestens einen Pulvereinlassventils (7) und/oder des mindestens einen Pulverauslassventils (8) sowie zum abwechselnden Anlegen eines Überdruckes und eines Unterdruckes in der mindestens einen Pulverförderkammer (4).

9. Pulverdichtstrompumpe (1) nach Anspruch 8,
wobei das mindestens eine Pulvereinlassventil (7) und das mindestens eine Pulverauslassventil (8) separat voneinander ansteuerbar sind.

10. Pulverdichtstrompumpe (1) nach einem der Ansprüche 1 bis 9,
wobei das mindestens eine Pulvereinlassventil (7) und das mindestens eine Pulverauslassventil (8) jeweils als Quetschventil ausgebildet sind, vorzugsweise von der Art, welche einen flexiblen elastischen Schlauch (14.1, 14.2) als Ventilkanal aufweist, welcher zum Schließen des entsprechenden Ventils (7, 8) mittels Betätigungsdruckluft in einer den Schlauch (14.1, 14.2) umgebenden Druckkammer (15.1, 15.2) zusammenquetschbar ist.

11. Pulverdichtstrompumpe (1) nach einem der Ansprüche 1 bis 10,
wobei eine Steuereinrichtung (90) vorgesehen ist, welche ausgebildet ist, wechselweise mindestens eine Luftaustauschöffnung (13) der mindestens einen Pulverförderkammer (4) mit einer Vakuumleitung oder Vakuumquelle (52) zu verbinden zum Einsaugen von Beschichtungspulver in die mindestens eine Pulverförderkammer (4) durch das mindestens eine offene Pulvereinlassventil (7), während das mindestens eine Pulverauslassventil (8) geschlossen ist, oder mit einer Druckluftversorgungsleitung (50) oder einer Druckluftquelle (58) zu verbinden zum pneumatischen Ausstoßen einer in der mindestens einer Pulverförderkammer (4) vorhandenen Pulverportion durch das mindestens eine offene Pulverauslassventil (8), während das mindestens eine Pulvereinlassventil (7) geschlossen ist.

12. Pulverdichtstrompumpe (1) nach einem der Ansprüche 1 bis 11,
wobei ferner mindestens eine Zusatzdruckluft-Einlassvorrichtung (9) an mindestens einer Stelle in den Pulverweg nach dem mindestens einen Pulverauslassventil (8) mündet zum bedarfsweisen Zuführen von Zusatzdruckluft als zusätzliche Transportdruckluft, wobei die Zusatzdruckluft-Einlassvorrichtung (9) insbesondere an mindestens einer Stelle in den Pulverweg zwischen dem Pulverauslassventil (8) und dem Pulverauslass (3) der Pulverdichtstrompumpe (1) mündet.

13. Pulverdichtstrompumpe (1) nach Anspruch 12,
wobei die Zusatzdruckluft-Einlassvorrichtung (9) ausgebildet ist, Zusatzdruckluft pulsierend in den Pulverweg einzuleiten.

14. Pulverdichtstrompumpe (1) nach Anspruch 12 oder 13,
wobei ferner eine Vorrichtung zum Zuführen von pulsierender Zusatzdruckluft zu der mindestens einen Zusatzdruckluft-Einlassvorrichtung (9) vorgesehen ist, wobei die Pulsfrequenz der Zusatzdruckluft mindestens gleich groß ist wie die Frequenz der mindestens einen Pulverförderkammer (4), mit welcher Pulverportionen von der mindestens einen Pulverförderkammer (4) abgegeben werden.

15. Pulverdichtstrompumpe (1) nach Anspruch 14,
wobei die Pulsfrequenz der Zusatzdruckluft gleich groß ist wie die Frequenz der mindestens einen Pulverförderkammer (4), mit welcher Pulverportionen von der Pulverförderkammer (4) abgegeben werden, und wobei die Vorrichtung zum Zuführen von pulsierender Zusatzdruckluft zu der mindestens einen Zusatzdruckluft-Einlassvorrichtung (9) ausgebildet ist, die Zusatzdruckluft der mindestens einen zusatzdruckluft-Einlassvorrichtung (9) im Hinblick auf den Pulverabgabezyklus der mindestens einen Pulverförderkammer (4) gegenphasig zuzuführen.

## Claims

1. A dense phase powder pump (1) for conveying coating powder from a first powder reservoir (101) to a second downstream powder reservoir or a downstream powder spray coating gun (102) or similar device for spraying coating powder, wherein the dense phase powder pump (1) has at least one powder conveying chamber (4) which is fluidly connected or connectable to the first powder reservoir (101) via a powder inlet (2) and to the second powder reservoir, or the powder spray coating gun (102) or similar device for spraying coating powder respectively, via a powder outlet (3), wherein at least one powder inlet valve (7) is provided at the powder inlet (2) and at least one powder outlet valve (8) is provided at the powder outlet (3),
**characterized in that**
the at least one powder inlet valve (7) and/or the at least one powder outlet valve (8) exhibit(s) an effective flow cross section in the respective open state which corresponds to at least 35% of the effective flow cross section of the at least one powder conveying chamber (4); and
the dense phase powder pump (1) is configured as a single-chamber dense phase powder pump and has only one single powder conveying chamber (4) for conveying coating powder.

2. The dense phase powder pump (1) according to claim 1,
wherein the at least one powder inlet valve (7) and the at least one powder outlet valve (8) exhibit an at least substantially identical effective flow cross section in the respective open state.

3. The dense phase powder pump (1) according to claim 1,
wherein the powder inlet valve (7) exhibits a larger effective cross section in the open state than an effective cross section of the powder outlet valve (8) in its open state.

4. The dense phase powder pump (1) according to claim 3,
wherein the effective cross section of the at least one open powder inlet valve (7) is configured at least 50%, preferably at least 100% and even more preferentially at least 250% larger than the effective flow cross section of the at least one open powder outlet valve (8).

5. The dense phase powder pump (1) according to one of claims 1 to 4,
wherein the at least one powder conveying chamber (4) comprises the powder inlet (2) at a first end region and the powder outlet (3) at an oppositely disposed second end region, wherein the at least one powder inlet valve (7) and the at least one powder outlet valve (8) are arranged at respective opposite end regions of the at least one powder conveying chamber (4).

6. The dense phase powder pump (1) according to one of claims 1 to 4,
wherein the at least one powder conveying chamber (4) comprises a powder channel at one end region which serves both as a powder inlet (2) as well as a powder outlet (3), wherein the at least one powder inlet valve (7) and the at least one powder outlet valve (8) are each provided in said powder channel (30).

7. The dense phase powder pump (1) according to claim 6,
wherein a distributor (31), particularly in the form of a Y-fitting, is further provided for the fluid connection of the powder channel (30) of the at least one powder conveying chamber (4) to the at least one powder inlet valve (7) on the one side and to the at least one powder outlet valve (8) on the other side.

8. The dense phase powder pump (1) according to one of claims 1 to 7,
wherein a control device (90) is further provided to control the at least one powder inlet valve (7) and/or the at least one powder outlet valve (8) as well as to alternatingly apply a positive pressure and a negative pressure in the at least one powder conveying chamber (4).

9. The dense phase powder pump (1) according to claim 8,
wherein the at least one powder inlet valve (7) and the at least one powder outlet valve (8) are separately controllable.

10. The dense phase powder pump (1) according to one of claims 1 to 9,
wherein the at least one powder inlet valve (7) and the at least one powder outlet valve (8) are in each case configured as a pinch valve, preferably of the type comprising a flexible elastic hose (14.1, 14.2) as a valve channel able to be squeezed by actuating compressed air in a pressure chamber (15.1, 15.2) surrounding the hose (14.1, 14.2) in order to close the respective valve (7, 8).

11. The dense phase powder pump (1) according to one of claims 1 to 10,
wherein a control device (90) is provided which is configured to alternatingly connect at least one air exchange opening (13) of the at least one powder conveying chamber (4) to a vacuum line or vacuum source (52) for drawing coating powder into the at least one powder conveying chamber (4) through the at least one open powder inlet valve (7) while the at least one powder outlet valve (8) is closed, or to a compressed air supply line (50) or a compressed air source (58) for pneumatically expelling a portion of powder in the at least one powder conveying chamber (4) through the at least one open powder outlet valve (8) while the at least one powder inlet valve (7) is closed.

12. The dense phase powder pump (1) according to one of claims 1 to 11,
wherein at least one additional compressed air inlet device (9) further empties into at least one point in the powder path past the at least one powder outlet valve (8) for supplying additional compressed air as additional conveying compressed air when needed, wherein the additional compressed air inlet device (9) in particular empties into at least one point in the powder path between the powder outlet valve (8) and the powder outlet (3) of the dense phase powder pump (1).

13. The dense phase powder pump (1) according to claim 12,
wherein the additional compressed air inlet device (9) is designed to pulsatively introduce additional compressed air into the powder path.

14. The dense phase powder pump (1) according to claim 12 or 13,
wherein a mechanism is further provided for supplying pulsative additional compressed air to the at least one additional compressed air inlet device (9), wherein the pulse frequency of the additional compressed air is at least equal to the frequency of the at least one powder conveying chamber (4) at which portions of powder are dispensed from the at least one powder conveying chamber (4).

15. The dense phase powder pump (1) according to claim 14,
wherein the pulse frequency of the additional compressed air is equal to the frequency of the at least one powder conveying chamber (4) at which portions of powder are dispensed from the powder conveying chamber (4), and wherein the mechanism for supplying pulsative additional compressed air to the at least one additional compressed air inlet device (9) is configured to supply the additional compressed air to the at least one additional compressed air inlet device (9) in phase opposition with regard to the powder dispensing cycle of the powder conveying chamber (4).

## Revendications

1. Pompe à poudre en phase dense (1) pour transporter une poudre de revêtement d'un premier réservoir de poudre (101) à un deuxième réservoir de poudre disposé en aval ou à un pistolet de revêtement par pulvérisation de poudre (102) disposé en aval ou à un dispositif similaire pour pulvériser une poudre de revêtement, dans laquelle
la pompe à poudre en phase dense (1) présente au moins une chambre de transport de poudre (4) qui est reliée ou susceptible d'être reliée en termes d'écoulement au premier réservoir de poudre (101) par une entrée de poudre (2) et au deuxième réservoir de poudre ou au pistolet de revêtement par pulvérisation de poudre (102) ou à un dispositif similaire destiné à la pulvérisation de poudre de revêtement par une sortie de poudre (3),
au moins une vanne d'entrée de poudre (7) est prévue à l'entrée de poudre (2) et au moins une vanne de sortie de poudre (8) est prévue à la sortie de poudre (3),
**caractérisée en ce que**
à l'état respectivement ouvert, ladite au moins une vanne d'entrée de poudre (7) et/ou ladite au moins une vanne de sortie de poudre (8) présente(nt) une section d'écoulement effective qui correspond à au moins 35 % de la section d'écoulement effective de ladite au moins une chambre de transport de poudre (4) ; et
la pompe à poudre en phase dense (1) est réalisée sous forme de pompe à poudre en phase dense à chambre unique et ne comporte qu'une seule chambre de transport de poudre (4) pour le transport de la poudre de revêtement.

2. Pompe à poudre en phase dense (1) selon la revendication 1,
dans laquelle ladite au moins une vanne d'entrée de poudre (7) et ladite au moins une vanne de sortie de poudre (8) présentent une section d'écoulement effective au moins sensiblement égale, à l'état respectivement ouvert.

3. Pompe à poudre en phase dense (1) selon la revendication 1,
dans laquelle, à l'état ouvert de la vanne d'entrée de poudre (7), celle-ci présente une section d'écoulement effective qui est plus grande qu'une section d'écoulement effective de la vanne de sortie de poudre (8) à l'état ouvert.

4. Pompe à poudre en phase dense (1) selon la revendication 3,
dans laquelle la section d'écoulement effective de ladite au moins une vanne d'entrée de poudre ouverte (7) est réalisée de manière à être plus grande d'au moins 50%, de préférence d'au moins 100% et de manière particulièrement préférée d'au moins 250% que la section d'écoulement effective de ladite au moins une vanne de sortie de poudre ouverte (8).

5. Pompe à poudre en phase dense (1) selon l'une des revendications 1 à 4,
dans laquelle ladite au moins une chambre de transport de poudre (4) présente l'entrée de poudre (2) dans une première zone d'extrémité et présente la sortie de poudre (3) dans une deuxième zone d'extrémité opposée, et
ladite au moins une vanne d'entrée de poudre (7) et ladite au moins une vanne de sortie de poudre (8) sont disposées chacune dans des zones d'extrémité opposées de ladite au moins une chambre de transport de poudre (4).

6. Pompe à poudre en phase dense (1) selon l'une des revendications 1 à 4,
dans laquelle ladite au moins une chambre de transport de poudre (4) présente un passage de poudre dans une zone d'extrémité, lequel sert à la fois d'entrée de poudre (2) et de sortie de poudre (3),
ladite au moins une vanne d'entrée de poudre (7) et ladite au moins une vanne de sortie de poudre (8) sont chacune prévues dans le passage de poudre (30).

7. Pompe à poudre en phase dense (1) selon la revendication 6,
dans laquelle est en outre prévu un distributeur (31), en particulier sous la forme d'une pièce en Y, pour relier en termes d'écoulement le passage de poudre (30) de ladite au moins une chambre de transport de poudre (4) à ladite au moins une vanne d'entrée de poudre (7) d'une part et à ladite au moins une vanne de sortie de poudre (8) d'autre part.

8. Pompe à poudre en phase dense (1) selon l'une des revendications 1 à 7,
dans laquelle il est en outre prévu un dispositif de commande (90) pour piloter ladite au moins une vanne d'entrée de poudre (7) et/ou ladite au moins une vanne de sortie de poudre (8) ainsi que pour appliquer en alternance une surpression et une dépression dans ladite au moins une chambre de transport de poudre (4).

9. Pompe à poudre en phase dense (1) selon la revendication 8,
dans laquelle ladite au moins une vanne d'entrée de poudre (7) et ladite au moins une vanne de sortie de poudre (8) peuvent être pilotées séparément l'une de l'autre.

10. Pompe à poudre en phase dense (1) selon l'une des revendications 1 à 9,
dans laquelle ladite au moins une vanne d'entrée de poudre (7) et ladite au moins une vanne de sortie de poudre (8) sont chacune réalisées sous forme de vanne à écrasement, de préférence du type comprenant un tuyau élastique flexible (14.1, 14.2) comme canal de vanne qui peut être écrasé dans une chambre de pression (15.1, 15.2) entourant le tuyau (14.1, 14.2) pour fermer la vanne correspondante (7, 8) au moyen d'air comprimé d'actionnement.

11. Pompe à poudre en phase dense (1) selon l'une des revendications 1 à 10,
dans laquelle est prévu un dispositif de commande (90) qui est réalisé pour relier en alternance au moins une ouverture d'échange d'air (13) de ladite au moins une chambre de transport de poudre (4) à une conduite à vide ou à une source de vide (52) pour aspirer la poudre de revêtement jusque dans ladite au moins une chambre de transport de poudre (4) par ladite au moins une vanne d'entrée de poudre ouverte (7), alors que ladite au moins une vanne de sortie de poudre (8) est fermée, ou pour la relier à une conduite d'alimentation en air comprimé (50) ou à une source d'air comprimé (58) pour éjecter pneumatiquement une part de la poudre, présente dans ladite au moins une chambre de transport de poudre (4), à travers ladite au moins une vanne de sortie de poudre (8) ouverte alors que ladite au moins une vanne d'entrée de poudre (7) est fermée.

12. Pompe à poudre en phase dense (1) selon l'une des revendications 1 à 11,
dans laquelle, en outre, au moins un dispositif d'entrée d'air comprimé supplémentaire (9) débouche à au moins un emplacement dans le trajet de la poudre après ladite au moins une vanne de sortie de poudre (8) pour l'alimentation, selon les besoins, d'air comprimé supplémentaire en tant qu'air comprimé de transport supplémentaire, et
le dispositif d'entrée d'air comprimé supplémentaire (9) débouche en particulier à au moins un emplacement dans le trajet de la poudre entre la vanne de sortie de poudre (8) et la sortie de poudre (3) de la pompe à poudre en phase dense (1).

13. Pompe à poudre en phase dense (1) selon la revendication 12,
dans laquelle le dispositif d'entrée d'air comprimé supplémentaire (9) est réalisé pour introduire de l'air comprimé supplémentaire par pulsation dans le trajet de la poudre.

14. Pompe à poudre en phase dense (1) selon la revendication 12 ou 13, dans laquelle il est en outre prévu un dispositif pour alimenter en air comprimé supplémentaire pulsé ledit au moins un dispositif d'entrée d'air comprimé supplémentaire (9), et
la fréquence de pulsation de l'air comprimé supplémentaire est au moins aussi élevée que la fréquence de ladite au moins une chambre de transport de poudre (4), fréquence à laquelle des parts de poudre sont distribuées depuis ladite au moins une chambre de transport de poudre (4).

15. Pompe à poudre en phase dense (1) selon la revendication 14,
dans laquelle la fréquence de pulsation de l'air comprimé supplémentaire est aussi élevée que la fréquence de ladite au moins une chambre de transport de poudre (4), à laquelle des parts de poudre sont distribuées depuis la chambre de transport de poudre (4), et
le dispositif d'alimentation en air comprimé supplémentaire pulsé vers ledit au moins un dispositif d'entrée d'air comprimé supplémentaire (9) est réalisé pour alimenter l'air comprimé supplémentaire vers ledit au moins un dispositif d'entrée d'air comprimé supplémentaire (9) en opposition de phase par rapport au cycle de distribution de poudre de ladite au moins une chambre de transport de poudre (4).
